# EUROPEAN PATENT SPECIFICATION

(11) **EP 4 499 350 B1**
(45) Date of publication and mention of the grant of the patent: **29.04.2026**
(21) Application number: 23715164.2
(22) Date of filing: 30.03.2023
(51) Int. Cl.: B25J 9/10, B25J 13/08, B25J 15/12

(54) **GRIPPER UNIT, GRIPPER SYSTEM, AND METHOD OF GRIPPING AN OBJECT**
GREIFEREINHEIT, GREIFERSYSTEM UND VERFAHREN ZUM GREIFEN EINES OBJEKTS
UNITÉ DE PRÉHENSION, SYSTÈME DE PRÉHENSION ET PROCÉDÉ DE PRÉHENSION D'UN OBJET

(30) Priority: 31.03.2022 EP 22166133
(43) Date of publication of application: 05.02.2025
(73) Proprietor: Sony Group Corporation, Tokyo 108-0075 (JP); Sony Europe B.V., Weybridge, Surrey KT13 0XW (GB)
(72) Inventor: HENNIG, Diana, 70327 Stuttgart (DE); STAHL, Simon, 70327 Stuttgart (DE); KHODABAKHSHISHALAMZARI, Elham, 70327 Stuttgart (DE); ROBERTS, Anthony, 70327 Stuttgart (DE); ROSSELLI, Silvia, 70327 Stuttgart (DE); NELLES, Gabriele, 70327 Stuttgart (DE); FONSECA DEICHMANN, Vitor Angelo, 70327 Stuttgart (DE); TAKUMA, Tomoaki, 70327 Stuttgart (DE); HENNING, Simon, 70327 Stuttgart (DE); SUZUKI, Shigeaki, 70327 Stuttgart (DE); YAGIHASHI, Tatsuya, 70327 Stuttgart (DE); SHIBUKAWA, Kentaro, 70327 Stuttgart (DE); ONO, Akira, 70327 Stuttgart (DE)
(74) Representative: Engelhard, Markus
(86) International application number: PCT/EP2023/058391
(87) International publication number: WO 2023/187108

(56) References cited:
- CN-A- 109 955 233
- JP-A- 2004 154 909
- US-A1- 2011 257 765
- US-A1- 2012 007 375

## Description

### BACKGROUND

The field of the DISCLOSURE lies in gripper units and gripper systems for robotics and prosthetics.

The present disclosure relates to a gripper unit for a gripper system.

The present disclosure also relates to a gripper system comprising at least one gripper unit according to the present disclosure.

Moreover, the present disclosure relates to a method of gripping an object by using a gripper system comprising at least one gripper unit.

### DESCRIPTION OF THE RELATED ART

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present disclosure.

Robots have to perform various tasks, such as gripping objects of various shapes and sizes, as well as gripping soft and/or fragile objects, in addition to gripping hard and/or robust objects where a rigid contact may be required. The same properties or functions are needed for prosthetic parts which aim at increasing gripping capabilities. This makes the design of a universal gripper unit or gripper system, e.g. an interface between a gripping entity (e.g. a robot or a human carrying a prosthetic device), and an outside environment (e.g. an object to be gripped by the robot or the human), a challenging task. Most conventional robotic and prosthetic interfaces include a function of handling machinery, i.e. hard and robust objects. However, gripping soft and fragile objects remains a challenge. In the prior art, gripping soft and fragile objects has been implemented by means of sophisticated sensing and control algorithms and devices. However, these are complicated and difficult to implement. Furthermore, conventional devices that are specially adapted for gripping soft and/or fragile objects may not be efficient for gripping hard and/or robust objects, and vice versa. Hence, conventional devices do not easily combine the two functionalities of gripping hard and soft objects.

CN 109955233 A describes a soft and hard gripper. The gripper is made from a shape memory polymer. A gripping-releasing method of the gripper comprises the following steps: transforming the shape memory polymer to a flexible rubber state under the action of an external load during gripping, and in the state, embedding a to-be-gripped object into the gripper or embedding the gripper into the to-be-gripped object or attaching the gripper to the surface of the to-be-gripped object to form tight contact; removing the external load, transforming the shape memory polymer gripper to a hard glass state, and clamping the object firmly or sticking the object firmly by the glass state shape memory polymer to pick-up the object; and restoring the shape memory polymer gripper to an initial shape to release the object under the action of the external load during releasing.

JP 2004-154909 A describes an article gripping device. In a mechanical hand, a flexible and non-elastic bag is provided with a pressure sensor and a viscosity control means for controlling the viscosity of fluid in the bag to compose modules and so as to control the liquid content in the bag, while arranging these modules and in a line to form the module set and then optionally/separately controlling both feeding/discharging of viscous fluid to each module and viscosity of them. The module set is arranged on the contact part with the gripped object to change connection pressure and elasticity for each module.

US 2012/007375 A1 describes a gripper finger including a surface area for clamping. This area this area is covered with a membrane including at least one section, which is substantially made of a shape memory polymer.

US 2011/257765 A1 describes a prosthetic arm apparatus including a plurality of segments that provide a user of the prosthetic arm apparatus with substantially the same movement capability and function as a human arm. The segments are connectable to one another and connectable to a prosthetic support apparatus that may be adorned by the user. Some segments may provide movement about more than one axis using a single actuator. The prosthetic arm apparatus may include a user interface incorporated therein and may include one or more communication systems for communicating with external devices.

### SUMMARY

In view of the above prior art, it is an object of the present disclosure to provide a gripper unit, a gripper system, and a method of gripping an object, which are more efficient, flexible, and user friendly.

This problem is solved by a gripper unit according to claim 1, a gripper unit according to claim 13, a gripper system according to claim 14, and a method according to claim 15.

According to an aspect of the present disclosure, a gripper unit for a gripper system is provided, wherein the gripper unit comprises: a base part; a two-dimensional array of filaments or stripes or ribbons arranged on the base part, wherein the filaments or stripes or ribbons comprise an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value; an actuation element that is configured to heat up the filaments or stripes or ribbons above the second temperature and/or to cool down the filaments or stripes or ribbons below the first temperature; and a controller configured to control the actuation element.

According to an aspect of the present disclosure, a gripper unit for a gripper system is provided, wherein the gripper unit comprises: a base part, wherein a two-dimensional or three-dimensional array of voids or holes or a hollow structure is formed in the base part or in a surface of the base part, wherein the base part comprises or is made of an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value; an actuation element that is configured to heat up the base part above the second temperature and/or to cool down the base part below the first temperature; and a controller configured to control the actuation element.

In particular, the gripper unit may be a gripper unit for robotics and/or prosthetics applications. Furthermore, the gripper unit can be an interface between a gripping entity (e.g. a robot or a human carrying a prosthetic device), and an outside environment (e.g. an object to be gripped by the robot or the human). In general, the gripper unit can be a unit for holding, gripping, grabbing or grasping one or more different objects, in particular objects of different shapes, sizes, weights, materials, textures, and/or surface properties such as friction coefficients, and/or objects at different temperatures. The gripper unit may be part of a gripper system for robotics and/or prosthetics applications. For example, the gripper system may comprise the gripper unit and an opposing member, such that an object can be gripped between the gripper unit and the opposing member. The gripper system may comprise at least two gripper units according to the disclosure, such that an object can be gripped between the at least two gripper units.

The base part can have different 2D or 3D shapes, such as rectangular, round or multi-sided shapes. In particular, the base part can be rectangular with one side length of the rectangle between 0.3 mm and 200 mm and the other side length of the rectangle between 0.3 and 200 mm. The base part can be rigid, flexible or elastic. In particular, the base part may comprise or be made of an elastic material, i.e. a material having a Young's modulus below 1MPa and/or a modulus 100 value (i.e. the stress at 100% strain) below 2 MPa. Furthermore, the base part can be solid or have holes or be structured, comprise or be made of a thermally inert material, or can comprise or be made of a thermally active material such that the base part is shape-conformable depending on the temperature.

The filaments are preferably longitudinal objects or long and/or thin elements, such as bristles, brushes, fibers, threads, strings, wires, or pillows. The filaments together may also be referred to as a formed part. The spacing between neighboring filaments can vary e.g. between 0.1 mm and 5 mm. The filaments can be shaped as solid or hollow columns, square prisms, triangular prisms, loops, tubes, cones, pillars, rounded pillars, twisted pillars, twisted synthetic fibers, spirals, helices, double helices, etc., or can have dendritic shapes. The filaments can have a length between 0.2 to 50 mm, and a thickness (i.e. a maximal diameter of the filament's cross-section) from 0.2 to 2 mm. Moreover, the filaments can have the same or different shapes, cross-sections, thicknesses, and/or lengths. In addition, the filaments can co-operate or interact with each other e.g. by heat transfer between different filaments.

At least part of the array of filaments or the entire array of filaments may be a regular array, in particular a hexagonal or quadratical array. In particular, the filaments may form a part of a two-dimensional Bravais lattice, in particular an oblique, rectangular, orthorombic, hexagonal, or square lattice. The Bravais lattice may comprise at least two filaments in the direction of each of the two primitive translation vectors, hence it may at least be a two-by-two lattice or array. The array of filaments may be an A × B array, where A and B can be the same or different numbers. However, note that the array in not necessarily a regular array. Thus, the two-dimensional array of filaments may be any two-dimensional arrangement of filaments.

At least part of the array of voids or holes or the entire array of voids or holes may be a regular array, in particular a hexagonal or quadratical array. In particular, the voids or holes may form a part of a two-dimensional or three-dimensional Bravais lattice, in particular an oblique, rectangular, orthorombic, hexagonal, or square lattice. The Bravais lattice may comprise at least two voids or holes in the direction of each of the two primitive translation vectors, hence it may at least be a two-by-two lattice or array. In the case of a two-dimensional array the array of voids or holes may be an A × B array, where A and B can be the same or different numbers. In the case of a three-dimensional array the array of voids or holes may be an A × B × C array, where A and B and C can be the same or different numbers. However, note that the array is not necessarily a regular array. Thus, the two-dimensional or three-dimensional array of voids or holes may be any two-dimensional or three-dimensional arrangement of voids or holes.

The active material may be a thermally active material, in particular a shape memory material, such as a shape memory polymer (SMP) material, especially a TPU-based SMP (thermoplastic polyurethane, TPU). The Shore hardness value of the active material may refer to a durometer scale. Especially, the Shore hardness value may be a Shore A value or Shore D value, which may refer to the ASTM D2240 type A and type D scale, respectively. More generally, the Shore value may refer to any one of the following scales according to the ASTM D2240 testing standard: A, B, C, D, DO, E, M, O, OO, OOO, OOO-S, and R. The Shore value may be a value between 0 and 100, with higher values indicating a harder material and lower values indicating a softer material.

The formed part, i.e. the filaments, and the base part, can be made of the same material or of different materials. Moreover, the filaments and the base part can be formed integrally. The base part can be a mesh with yam-type filaments attached by knots as in latch hooking methods or other carpet fabrication techniques. Furthermore, the knots can be fixed with thin layers of glue, e.g. epoxy glue. Alternatively, the base part can be a perforated or a solid plate to fit the filaments. Alternatively, the base part and/or the filaments can be fabricated by 3D printing. Hence, the filaments can for example be implemented by textile processing techniques such as embroidery or latch hooking, and fabricated by injection molding or filament extrusion. Furthermore, the filaments can extend in a direction perpendicular to the base part, or can enclose an angle smaller than 90° with the base part, when they are in their initial undeformed shape.

The actuation element may be a heating and/or cooling element for heating and/or cooling the filaments and/or the base part. The controller may be implemented as a physical component or hardware part of the gripper unit and/or as a software or computer program. The controller may be operated by a user or may work without input by the user, e.g. by executing the instructions of a program installed on a hardware component of the gripper unit. Each component of the gripper unit mentioned above will be described in more detail below.

The gripper unit according to the present disclosure has the technical advantage that the two-dimensional array of filaments and/or the base part with the two-dimensional or three-dimensional array of voids or holes formed therein has an increased surface area e.g. compared to a one-dimensional array. By gripping an object with the gripper unit, at least some or all of the filaments of the two-dimensional array and/or at least a portion of the base part or the entire base part may be in contact with or be pressed against the object, which allows for a firm grip of the object. In particular, when the temperature of the active material is below the first temperature, the Shore hardness value of the active material is greater than a first Shore hardness value, such that the filaments and/or the base part are hard and/or stiff. In this case, the filaments and/or the base part may exert a greater force on the object when the gripper unit is pressed against the object, and hence the gripper unit is particularly useful for gripping and holding hard and/or robust or heavy objects, which require greater forces.

On the other hand, when the temperature of the active material is above the second temperature, the Shore hardness value of the active material is lower than a second Shore hardness value, such that the filaments and/or the base part are soft and/or flexible. As a consequence, the filaments and/or the base part may deform or change their shape more easily when the gripper unit is pressed against the object. In particular, the filaments and/or the base part may deform to a 3D shape that corresponds to or matches a shape of the object, thus providing a shape constraint or shape match for the object. Due to the soft and/or flexible filaments and/or the soft and/or flexible base part, the force exerted by the filaments and/or the base part on the object can be reduced, and hence the risk of damaging the object by the filaments and/or the base part can be reduced, whereby the gripper unit is particularly useful for gripping soft and/or fragile objects. Furthermore, when the filaments and/or the base part are deformed, they may bend around the object and thereby increase the contact area between the filaments and the object and/or between the base part and the object, thus allowing a firm grip of the object. In other words, surface area and mechanical interlocking are greatly improved, enabling a firm grasp, which is particularly useful for grasping of rounded shapes.

Furthermore, when the filaments and/or the base part are deformed as described above and the temperature is subsequently reduced below the first temperature, the filaments and/or the base part may freeze or stiffen in their deformed shape. In this case, the filaments and/or the base part can keep the object mechanically locked inside, which leads to a particularly firm grasp of the object as e.g. needed with high forces or weights. After release of the object, the bristles can be re-heated to both recover their shape and also to be soft to again re-conform to the next object to be gripped.

Furthermore, the base part with the two-dimensional or three-dimensional array of voids or holes formed therein has the advantage that dust or dirt does not easily accumulate on the base part, which increases the gripping efficiency and the durability of the gripper unit.

In summary, the gripper unit has the advantage that it adapts and/or conforms to the shape of an object to be gripped, in particular when the temperature of the active material is above the second temperature. Thus, the gripper unit is adaptive and may therefore be called an adaptive gripper unit. Furthermore, by changing the temperature of the active material, the gripper unit can be used both for gripping hard and/or robust objects and for gripping soft and/or fragile objects, and thus the gripper unit combines these two functionalities in a single device. Compared to the prior art, the gripper unit therefore has an increased flexibility and efficiency in gripping, grabbing, or grasping various objects. In particular, when used for robotics or prosthetics applications, the gripper unit does not need to be exchanged each time the object to be gripped is changed, but a single gripper unit can be used for gripping objects of different shape, size, and material. Therefore the user friendliness is greatly increased. Furthermore, the gripper unit has a simple working principle and in particular does not require the implementation of complicated sensing and/or control algorithms. Therefore, the gripper unit is also easy to manufacture and less expensive than conventional solutions.

According to an aspect of the present disclosure, the active material has a Shore hardness value greater than a third Shore hardness value if the temperature of the active material is below a fifth temperature and has a Shore hardness value lower than a fourth Shore hardness value if the temperature of the active material is above a sixth temperature, wherein the second temperature is lower than the fifth temperature, wherein the fifth temperature is lower than or equal to the sixth temperature, wherein the second Shore hardness value is greater than the third Shore hardness value, wherein the third Shore hardness value is greater than or equal to the fourth Shore hardness value; and the actuation element is configured to heat up the filaments and/or the base part above the sixth temperature and/or to cool down the filaments and/or the base part below the fifth temperature. As a consequence, there are at least three temperature ranges with corresponding different Shore hardness values of the active material: below the first temperature, the Shore hardness value of the active material is greater than the first Shore hardness value; between the second and the fifth temperature, the Shore hardness value of the active material is lower than the second Shore hardness value but greater than the third Shore hardness value; and above the sixth temperature, the Shore hardness value is lower than the fourth Shore hardness value. Thus, by varying the temperature of the active material e.g. using the actuation element, the Shore hardness value of the active material can be switched between at least three different values, corresponding e.g. to "hard", "medium", or "soft" material properties. This further contributes to making the gripper unit more efficient, flexible, and user friendly. The above aspect can e.g. be realized by using, as the active material, a multiple-way SMP material such as a two-way SMP material. Yet more temperature ranges with corresponding different Shore hardness values can e.g. be achieved by using a multiple-way SMP material such as a triple-way SMP material or quadrupole-way SMP material. Strategies to design two-way or multiple-way thermo-responsive SMP materials may include: (i) incorporating two or more well-separated transition temperatures into the system (e.g., glass, melting, or clearing crystalline transitions); (ii) introducing a broad (either glass or melting) transition temperature range. Strategy (i) can be employed by using either glass or melting transitions, and nematic-isotropic transformations of nematic network. For example, multiple-way SMPs can be produced by designing and synthesizing a series of linear poly(lactic acid)-based copolymers containing a smectic liquid crystal in the main-chain, having two distinguished glass transition temperatures and one liquid crystalline clearing transition temperature. Alternative methods for creating multiple, well-separated switching transitions in one system consist of laminating two SMPs which have well-separated transition temperatures or of developing hybrid SMPs with multiple thermal transitions. In case of strategy (ii), the broad glass/melting transition may be considered a consecutive distribution of a certain number of glass/melting transitions, and the recovery process of the permanent shape from the different temporary shapes is triggered at various temperatures, corresponding to the temperatures at which the material is deformed.

According to an aspect of the present disclosure, the first temperature is equal to the second temperature. This has the advantage that by changing the temperature by only a small amount (e.g. from slightly below the first temperature to slightly above the first temperature), the hardness of the filaments and/or the base part can be changed (e.g. from a Shore hardness value greater than the first Shore hardness value to a Shore hardness value lower than the second Shore hardness value). Therefore, the switching between hard and soft filaments and/or base part can be done more quickly and efficiently and requires less energy.

According to an aspect of the present disclosure, the active material is a shape-memory polymer, SMP, material, wherein preferably the first temperature and/or the second temperature is equal to a first glass transition temperature of the SMP material. In the following, the first glass transition temperature may also be referred to merely as the glass transition temperature. SMP materials have significantly different Shore hardness values in the two phases below the glass transition temperature and above the glass transition temperature. Furthermore, SMP materials can "remember" an initial shape and, after being deformed, restore the initial shape by heating the material above the glass transition temperature. Thus, after gripping an object as described above, the initial shape of the deformed filaments and/or base part can be restored by heating them above the second temperature, whereafter another object (e.g. with a different shape) can be gripped by the gripper unit. Hence, the efficiency, flexibility and user friendliness of the gripper unit is further increased. In other words, filaments and/or base part comprising a SMP material show bi-stability in terms of shape, which allows to bring them into a different shape by means of heating them above the glass transition temperature and subsequent cooling, which can be understood as freezing them into shape. From there, the original shape can be restored by another heating process above the glass transition temperature.

In particular, the glass transition temperature of the SMP material can be lower than or equal to 65 °C, lower than or equal to 45 °C, lower than or equal to 40 °C, lower than or equal to 35 °C, or lower than or equal to 30 °C. When the temperature of the SMP material is below the glass transition temperature, the active material can have a Shore D hardness value greater than or equal to 65; when the temperature of the active material is above glass transition temperature, the active material can have a Shore D hardness value lower than or equal to 35. These preferred examples provide particularly advantageous gripping properties of the gripper unit.

In particular, the SMP materials as indicated in the following table can be used as the active material, which provides particularly advantageous gripping properties (in the following table, "Code" is a material code which identifies the SMP material, Tg denotes the respective glass temperature of the SMP material, "Shore D (glassy)" denotes the Shore D hardness value in the glassy (hard) phase below Tg, "Shore D (rubbery)" denotes the Shore D hardness value in the rubbery (soft) phase above Tg, and "Shore A" denotes a Shore A hardness value; in particular, the Shore A value 93 of the material EP-1001 refers to the glassy phase):

| **Code** | **Company** | **Chemical composition** | **Tg** | **Shore D (glassy)** | **Shore D (rubbery)** | **Shore A** |
|---|---|---|---|---|---|---|
| EP-1001 | Mitsui Chemicals | α-Olefin-based | 30 | | | 93 |
| EP-1013 | Mitsui Chemicals | α-Olefin-based | 40 | 69 | | |
| MM-3520 | SMP Technologies | TPU-based | 35 | 77 | 30 | |
| MM-4520 | SMP Technologies | TPU-based | 45 | 76 | 30 | |
| MM-6520 | SMP Technologies | TPU-based | 65 | 76 | 35 | |

Further details on the SMP materials MM-3520 and MM-4520 are provided in the table below:

| Item | Unit | MM (Ether Type) | | | |
|---|---|---|---|---|---|
| | | 3520 | | 4520 | |
| | | G | R | G | R |
| Hardness | H_{D}D | 77 | 30 | 76 | 30 |
| 100%Modulus | MPa | | 2.3 | | 1.4 |
| T S | Mpa | 51 | 10 | 55 | 10 |
| Elongation | % | 30-50 | >600 | 30-50 | >600 |
| B M | Mpa | 2450 | | 2150 | |
| B S | Mpa | 85 | | 80 | |
| S G | | 1.25 | | 1.25 | |
| Tg | °C | 35 | | 45 | |

Here, G denotes the hardness value in the hard (glassy) phase, R denotes the hardness value in the soft (rubbery) phase, T S denotes the tensile strength, B M the bending modulus, B S the bending strength, S G the specific gravity, and Tg the glass transition temperature in degree Celsius. Generally, one may vary the softness on a scale at which the material is still considered as solid and is not self-adhesive (such as chewing gum). Hard states can go up to the end of the scale at Shore D100.

Further details on the SMP materials EP-1001 and EP-1013 are provided in the table below:

| Item | | Unit | EP-1001 | EP-1013 |
|---|---|---|---|---|
| MFR (230 °C, 2.16kgf) | | g/10min | 10 | 10 |
| Lightweight | Density | kg/m³ | 840 | 838 |
| Flexibility | Surface hardness (Shore A) | Immediately After 15sec. | A93 | D69 |
| | | | A70 | D55 |
| Mechanical properties | Young modulus | Mpa | 80 | 450 |
| | Elongation at break | % | 500 | 400 |
| | Tensile strength at break | Mpa | 27 | 30 |
| Heat resistance | Tm | °C | - | 130 |
| | Tg | °C | 30 | 40 |
| Energy Absorption | tan d | peak value | 2.7 | 0.93 |
| | Temperature giving tanδ peak | °C | 30 | 43 |

According to an aspect of the present disclosure, the fifth temperature is equal to the sixth temperature. In particular, the active material may be a SMP material. Furthermore, the fifth temperature and/or the sixth temperature may be equal to a second glass transition temperature of the SMP material, wherein the second glass transition temperature is greater than the first glass transition temperature. As described above, active materials with two or more glass transition temperatures have the advantage of providing three or more temperature ranges with corresponding different Shore hardness values of the active material, which contributes to making the gripper unit more efficient, flexible, and user friendly.

According to the invention, at least some or all of the filaments and/or at least a portion of the base part or the entire base part further comprise a thermochromic material that has a first color if the temperature of the thermochromic material is below a third temperature and has a second color different from the first color if the temperature of the thermochromic material is above a fourth temperature; i) wherein the third temperature is lower than or equal to the first temperature and the first temperature is lower than or equal to the fourth temperature, and/or ii) wherein the third temperature is lower than or equal to the second temperature and the second temperature is lower than or equal to the fourth temperature. The third temperature may be equal to the fourth temperature. Especially in this case, the third temperature may be referred to as a color transition temperature or color changing temperature of the thermochromic material. When a filament and/or the base part comprises both the active material and the thermochromic material, and the temperature of the filament and/or the base part is uniform or substantially uniform such that the temperature of the thermochromic material is equal or substantially equal to the temperature of the active material, then the color of the filament and/or the base part, which depends on the temperature of the thermochromic material, can be used as an indicator for the Shore hardness value of the filament and/or the base part, which depends on the temperature of the active material, provided that at least one of the above conditions i) and ii) is fulfilled or provided that the color transition temperature of the thermochromic material is equal or substantially equal to the glass transition temperature of the active material.

In particular, in case i) above, if the thermochromic material has the first color, this indicates that the temperature (of the thermochromic material and the active material) is below the third temperature and therefore also below the first temperature, which means that the Shore hardness value of the active material is above the first Shore hardness value. By contrast, if the thermochromic material has the second color, this indicates that the temperature is above the fourth temperature and therefore also above the first temperature. Thus, in case i) the color of the thermochromic material can be used to confirm whether the temperature of the active material is below the first temperature or not.

Similarly, in case ii) above, if the thermochromic material has the second color, this indicates that the temperature (of the thermochromic material and the active material) is above the fourth temperature and therefore also above the second temperature, which means that the Shore hardness value of the active material is below the second Shore hardness value. By contrast, if the thermochromic material has the first color, this indicates that the temperature is below the third temperature and therefore also below the second temperature. Thus, in case ii) the color of the thermochromic material can be used to confirm whether the temperature of the active material is above the second temperature or not.

In a particularly advantageous embodiment, both conditions i) and ii) are fulfilled simultaneously, i.e., i) the third temperature is lower than or equal to the first temperature and the first temperature is lower than or equal to the fourth temperature, and ii) the third temperature is lower than or equal to the second temperature and the second temperature is lower than or equal to the fourth temperature. In this case, if the thermochromic material has the first color, this indicates that the temperature (of the thermochromic material and the active material) is below the third temperature and therefore also below the first temperature, which means that the Shore hardness value of the active material is above the first Shore hardness value. By contrast, if the thermochromic material has the second color, this indicates that the temperature is above the fourth temperature and therefore also above the second temperature, which means that the Shore hardness value of the active material is below the second Shore hardness value. Hence, in this case, the color of the thermochromic material is particularly useful for confirming the Shore hardness value of the active material.

In other words, the thermochromic effect of the filaments and/or the base part visually indicates whether they are in the heated or cold state. Furthermore, such visual indications can be used to assess if the gripped material is cooler or hotter than the gripper, or its thermal conductivity; the visual indication may give useful feedback to the human operator or a machine vision system.

The color of the thermochromic material of the filaments and/or the base part can be detected by human vision, or by a color sensor which may e.g. be part of the same gripper unit, another gripper unit or an opposing member of a gripper system including the gripper unit, or may be an external sensor. For example, in the case of a gripper system comprising two opposing gripper units and a connecting part connecting the two gripper units with each other, at least one of the two gripper units may include a color sensor configured to detect a color of at least some of the filaments and/or at least a portion of the base part of the respective other gripper unit, or the connecting part may include a color sensor configured to detect a color of at least some of the filaments and/or at least a portion of the base part of at least one of the two opposing gripper units. The detected color of the thermochromic material can be used for evaluating the Shore hardness value of the respective filaments and/or base part, which in turn can be used for controlling the gripper unit, e.g. such that it only grips the object if the Shore hardness value of the filaments and/or the base part corresponds to a desired value (e.g. if the Shore hardness value is greater than the first Shore hardness value for gripping a hard and/or robust object, or if the Shore hardness value is lower than the second Shore hardness value for gripping a soft and/or fragile object), or for controlling the actuation element, e.g. such that it heats up or cools down the filaments and/or the base part in order to achieve the desired hardness. Thus, the thermochromic material contributes to making the gripper unit more efficient, flexible, and user friendly.

In particular, the following materials can be used as thermochromic materials, which provide particularly advantageous color properties, in particular in combination with any one of the SMP materials mentioned above. The thermochromic base materials are compatible with the used SMP materials. Note that the materials listed below can have three different colors depending on the temperature range. For example, the material in the first line of the following table is green below 30 °C, yellow between 30 °C and 60 °C, and white above 60 °C. In this case, for example, the "third temperature" and the "fourth temperature" as defined above may both be equal to 30 °C, such that the "first color" defined above (i.e. the color of the thermochromic material below the third temperature) is green and the "second color" defined above (i.e. the color of the thermochromic material above the fourth temperature) is yellow. Alternatively, the "third temperature" and the "fourth temperature" may both be 60 °C, such that the "first color" is yellow the "second color" is white. Yet alternatively, the "third temperature" may be 30 °C and the "fourth temperature" may be 60 °C, such that the "first color" is green and the "second color" is white. The analogous properties apply to the material in the second line of the following table. Furthermore, a thermochromic material with multiple color transition temperatures may be used in combination with an active material with multiple glass transition temperatures as described above, e.g. if each color transition temperature is equal or substantially equal to a corresponding glass transition temperature. In this case, the multiple different colors of the thermochromic material may indicate the respective multiple different Shore hardness values of the active material. Yet alternatively, a first color transition of the thermochromic material may be used to indicate a glass transition of the active material, while a second color transition may show either a critical temperature for user or object interaction (e.g. avoid skin burn) or material status (e.g. melting of the material, leading to permanent deformation under strain).

| **Code** | **Part No** | Lot **No** | **Company** | **Color** | **T1°C** | **Color** | **T2°C** | **Color** | **T3°C** |
|---|---|---|---|---|---|---|---|---|---|
| TCMB-PE-22Series | TCMB-PE- 22GB31YL60NA | 210706-PEMB-TCGBYLNA01 | Donna Polymer | Green | <30 | yellow | >30<60 | white | >60 |
| TCMB-PE-22Series | TCMB-LDPE-12PP43RD65NA | 121120202 | Donna Polymer | blue | < 45 | red | >45 <65 | White | > 65 |

For example, the thermochromic material can be added to the SMP material in between 1 and 10 wt% (weight percent). Preferably, the thermochromic material is added to the SMP material in 5 wt%. Both thermochromic masterbatches may have the same composition as indicated in the table below, only the type of the pigment and activation temperature may differ:

| **SECTION III-CHEMICAL COMPOSITION/INFORMATION ON INGREDIENTS** | | | | | |
|---|---|---|---|---|---|
| **PRODUCT NAME** | | | | | |
| Thermochromic Masterbatch TCMB-PE-22 Series | | | | | |
| **CHEMICAL NATURE** | **Wt%** | **CAS NO.** | **ECS NO.** | **Symbol** | **R-Phrases** |
| LDPE | 35~70% | 9002-88-4 | -- | -- | -- |
| Thennochromic Pigment | 20-35% | -- | -- | -- | -- |
| Process Aid | 5-25% | -- | -- | -- | -- |
| Pigment | 0∼10% | -- | -- | -- | -- |

The thermochromic feature of the filaments and/or the base part can be made intrinsic e.g. by molding the filaments and/or the base part with a thermochromic masterbatch or by mixing in thermochromic pigments. Alternatively, the thermochromic effect can be achieved by providing the filaments and/or the base part with a surface coating comprising the thermochromic material, as described in more detail below.

According to an aspect of the present disclosure, at least some or all of the filaments and/or at least a portion of the base part or the entire base part comprise a mixture of the active material with pigments of the thermochromic material. This has the advantage that the filaments and/or the base part can be fabricated efficiently by first mixing the pigments of the thermochromic material with the active material and then forming the filaments and/or the base part from the material mixture, e.g. by any of the fabrication methods described above.

According to an aspect of the present disclosure, at least some or all of the filaments comprise an inner portion (or core) and a coating layer (or shell) covering the inner portion, wherein the inner portion comprises the active material and the coating layer comprises the thermochromic material. This has the advantage that the filaments can be fabricated efficiently by first forming the inner portions from the active material and then coating the inner portions with the layer comprising the thermochromic material. Furthermore, since the thermochromic material forms a coating layer, i.e. an outer portion of the filaments, the color of the thermochromic material can be evaluated very efficiently by human vision or by a color sensor.

According to an aspect of the present disclosure, the gripper unit further comprises a color sensor, which is configured to detect a color of at least some or all of the filaments and/or at least a portion of the base part or the entire base part of the gripper unit and/or another gripper unit. The color sensor facilitates the detection and allows for a more precise detection of the color of the thermochromic material as compared to detection by human vision. As described above, the color detected by the color sensor can be used for evaluating the Shore hardness value of the respective filaments and/or base part, which in turn can be used for controlling the respective gripper unit, e.g. such that it only grips the object if the Shore hardness value of the filaments and/or the base part corresponds to a desired value, or for controlling the respective actuation element, e.g. such that it heats up or cools down the respective filaments and/or base part to a desired temperature.

In particular, the object to be gripped can be "probed" for gripping. For example, when the object is being gripped, at least the tips of those filaments which are in contact with the object may change their color due to heat transfer between the object and the filaments. Thus, the object may provide a thermochromic feedback. This color change can be detected by the color sensor, and the gripper unit can be controlled based on the detected color change. For example, when the object has an appropriate temperature, the process of gripping may be continued, otherwise (e.g. if the temperature of the object is too hot or too cold) the process may be stopped.

Advantageous effects may also be achieved in situations where the object changes the temperature of the filaments and/or the base part during gripping. For example, if the object is at a temperature higher than the temperature of the active material, it may cause the filaments and/or the base part to heat up and become softer, such that the filaments and/or the base part may adapt or conform to the shape of the object. In other words, the object to be gripped may facilitate the shape-conformity of the bristles. After that, the object and the filaments and/or the base part may cool down (e.g. actively by means of the actuation element or passively e.g. by heat exchange with the environment) such that the filaments and/or the base part become stiff, which allows for a firm grip of the object.

In addition, a reaction speed of the filaments' color change and/or color change of the base part may be indicative for the thermal conductivity of the object. By detecting the reaction speed of the filaments" color change and/or color change of the base part by means of the color sensor, it is thus possible e.g. to differentiate metallic from plastic objects.

Furthermore, the color sensor may be particularly useful in gripper systems comprising a plurality of gripper units. For example, the color sensor of a first gripper unit may detect the color of the filaments and/or the base part of a second gripper unit, and the controller of the first gripper unit may control the actuator of the first gripper unit such that it heats up or cools down the filaments and/or the base part of the first gripper unit to the same or substantially the same temperature as the filaments and/or the base part of the second gripper unit. Thus, communication between different gripper units can be improved, and the gripping of objects by such interacting gripper units becomes more efficient. In summary, the above features related to the color sensor contribute to making the gripper unit and the gripper system more efficient, flexible, and user friendly. Furthermore, each gripper unit of the gripper system can have a color sensor, which is configured to detect the color and thus obtain the temperature or a temperature range of the filaments and/or the base part of an opposing gripper unit in order to feedback the user or the system during operation.

According to an aspect of the disclosure, at least some or all of the filaments and/or the base part comprise a heating and/or cooling element or a thermally conductive material, such as a metal. In one embodiment, at least some of the filaments are hollow and are filled with the heating and/or cooling element or the thermally conductive material. In other words, the filaments can have a core or inner portion comprising metal and a shell or outer portion comprising the SMP material. In another embodiment, at least some of the filaments may form a double-start helix, wherein one start of the double-start helix comprises metal and the other start of the double-start helix comprises the SMP material. Each of these embodiments has the advantage of facilitating heat transfer and shape-conformance of the filaments and/or the base part, such that an object can be gripped more firmly and more efficiently.

According to an aspect of the present disclosure, the actuation element is a Peltier element. The Peltier element can be used both for heating up the filaments and/or the base part above the second temperature and for cooling down the filaments and/or the base part below the first temperature. Thus, the Peltier element enables effective heat transfer to the filaments and/or the base part. Furthermore, Peltier elements may be constructed without moving parts or circulating liquid, thus they are very stable and long-lived, invulnerable to leaks, and they may have small size and flexible shape such that they can be easily integrated into the gripper unit.

Alternatively, the actuation element may be configured to heat up the filaments and/or the base part by blowing air, e.g. with a temperature equal to or higher or effectively higher than the second temperature, through the base part (preferably a mesh or a perforated plate) or through a (branched) air channel (e.g. behind the actuation element) towards the filaments and/or the base part. Alternatively and/or in addition, the actuation element may be configured to cool down the filaments and/or the base part by blowing air, e.g. with a temperature equal to or lower or effectively lower than the first temperature, through the base part (preferably a mesh or a perforated plate) or through a (branched) air channel (e.g. behind the actuation element) towards the filaments and/or the base part. In particular, room temperature air can be sufficient to cool down or heat up an SMP with an appropriate glass transition temperature (e.g. as in the concept of a cooling fan). Such an actuation element can be used both for heating and cooling, only by changing the temperature of the air blown to the filaments and/or the base part. Alternatively, the actuation element may include two separate blowers connected to the air channel(s), i.e., the actuation element may include one blower for heating up the filaments and/or the base part and another blower for cooling down the filaments and/or the base part. The latter alternative has the advantage of optimizing the switching time, as e.g. in a hairdryer concept, because the switching between hot and cold air of a single combined blower may take more time. Furthermore, heating and cooling by air convection allows for a very fast adaptation of the filaments' temperature and/or temperature of the base part and therefore contributes to an efficient gripper unit. A piece of fabric (such as wool, silk, electrically and/or thermally conductive textiles or nonwovens) can be placed between the air channel and the base part to slow down air speed and avoid blowing away the object to be gripped.

In summary, the heating and/or cooling by the actuation element may be implemented actively via e.g. a heat pump or thermal pump such as a Peltier element, or passively by convection, conduction, or radiation. In particular, the actuation element may be a Joule heating element such as a Joule heating thin film. Furthermore, the actuation element can be rigid, or bendable, or flexible and/or elastic, can be implemented as a sheet, a fabric, a track, or a wire. Furthermore, the actuation element may be provided separately or may be integrated in the base part and/or in the filaments. For example, the filaments may comprise a Joule heatable coating and/or core functioning as the actuation element.

Note that it is not necessary that the actuation element has both a heating and a cooling function. For example, an actuation element may only have a heating function, i.e. be configured to heat up the filaments and/or the base part above the second temperature. In this case, by switching off the heating function of the actuation element, the filaments and/or the base part may passively cool down below the first temperature (e.g. if the first temperature is greater than or equal to the ambient temperature of the gripper unit). Similarly, the actuation element may only have a cooling function, i.e. be configured to cool down the filaments and/or the base part below the first temperature. In this case, by switching off the cooling function of the actuation element, the filaments and/or the base part may passively heat up above the second temperature (e.g. if the second temperature is lower than or equal to the ambient temperature of the gripper unit).

The filaments can all be made of the same material or can be made of different materials. In particular, the filaments may all comprise the same active material, or may comprise different active materials. Furthermore, the filaments may all comprise the same thermochromic material, or may comprise different thermochromic materials. In particular, the filaments may have different glass transition temperatures or switching temperatures to enhance the versatility of the gripping unit.

According to an aspect of the disclosure, the array of filaments may comprise a sub-array of first filaments and a sub-array of second filaments, wherein at least some or all of the first filaments have a different active material, different glass transition temperature of the SMP material, different Shore hardness value of the active material if the temperature of the active material is below the first temperature, different Shore hardness value of the active material if the temperature of the active material is above the second temperature, different thermochromic material, different color of the thermochromic material if the temperature of the thermochromic material is below the third temperature, different color of the thermochromic material if the temperature of the thermochromic material is above the fourth temperature, different shape, different length, different thickness, and/or different cross-section than at least some or all of the second filaments.

The first and second filaments may be specially adapted to grip objects of a respective first and second kind, e.g. objects of a respective first and second size, shape, material, weight, and/or hardness. Hence, due to the presence of at least two different kinds of filaments, the gripper unit may be adapted to grip at least two different kinds of objects. For example, the first filaments may be optimized for gripping harder and/or more robust objects, while the second filaments may be optimized for gripping softer and/or more fragile objects. Apart from this, the advantageous effects of the filaments described above also apply separately to the first and the second filaments. In particular, the sub-array of first filaments and the sub-array of second filaments may each be regular arrays as described above for the array of filaments.

In one embodiment, the first filaments have a greater length and a lower glass transition temperature than the second filaments. In this case, if the temperature of the filaments lies between the glass transition temperature of the first filaments and the glass transition temperature of the second filaments, the first filaments may have a lower Shore hardness value than the second filaments. The longer and softer first filaments may therefore be used for gripping softer and more fragile objects, while the shorter and harder second filaments may be used for gripping harder and more robust objects. This contributes to making the gripper unit more efficient, flexible and user-friendly.

Alternatively or in addition, the first and second filaments may interact with each other in such a way that the gripping of a single object can be improved. For example, the first filaments may have a greater length and a lower Shore hardness value than the second filaments. In this case, if the gripper unit is pressed against an object to be gripped, the first filaments come into contact with the object before the second filaments, due to the greater length of the first filaments. This has the advantage that the softer first filaments may cushion an impact between the gripper unit and the object, and damaging the object can be avoided. By further pressing the gripper unit against the object, the harder second filaments also come into contact with the object and eventually provide a firm grip of the object. Thus, by the interaction of the first and second filaments, the gripping properties of the gripper unit can be improved, and the safety can be improved.

Furthermore, for example, the first filaments may comprise a lower amount of thermochromic pigments than the second filaments. Thereby, the total amount of thermochromic pigments can be reduced, while the color of the second filaments can still be detected efficiently by a color sensor as described above. This may contribute to reducing the costs of the gripper unit.

According to an aspect of the disclosure, a density of the first filaments may be equal to a density of the second filaments on the entire base part or at least on a common portion of the base part. This has the advantage that different objects can be gripped by the respective filaments on the same common portion of the base part. This may reduce the size and costs of the gripper unit, and therefore make the gripper unit more efficient and user friendly.

According to an aspect of the disclosure, a density of the first filaments is greater than a density of the second filaments on a first portion of the base part and a density of the first filaments is lower than a density of the second filaments on a second portion of the base part. The first filaments in the first portion and the second filaments in the second portion may e.g. comprise different active materials, e.g. different SMP materials with corresponding different glass transition temperatures, and may therefore be actuated at different temperatures, depending on the types of objects to be grabbed.

Furthermore, by the interaction of different filaments on different portions of the base part, the gripping properties of the gripper unit can be improved. For example, the filaments on the outer portion of the base part may be longer than the filaments on the inner portion of the base part. In this case, when an object is gripped by the gripper unit, first the object may be enclosed by the longer filaments such that the object is prevented from slipping away. After that, the object may come into contact with the shorter filaments which may provide a firm grip of the object.

In another example, the filaments on the outer portion of the base part may be harder than the filaments on the inner portion of the base part. In this case, when the gripper unit is pressed against an object, the filaments on the inner portion will deform more easily than the filaments on the outer portion, whereby the object will be fixed towards the inner portion, such that the object is prevented from slipping away. Thereby, the gripping properties of the gripper unit can be further improved.

According to an aspect of the disclosure, each filament has a first point or end point attached to the base part and a second point or end point opposite to the first point or end point in a direction of the respective filament, and the filaments have different lengths such that the second points or end points form a curved surface even if the base part is flat or has a different shape than the curved surface. The curved surface may be specially adapted to the shape of a particular object to be gripped. Hence, such particular objects may be gripped more easily by the gripper unit, even when the filaments are in their initial, undeformed state, i.e. without requiring any heating and deforming of the filaments as described above. However, objects of other shapes may still be gripped by the same gripper unit by increasing the temperature of the filaments above the second temperature, such that they become soft and deformable as described above. Hence, this aspect may be particularly useful if the shape of at least some of the objects to be gripped is known in advance. Note that the above aspect may also be realized e.g. in combination with loop-shaped filaments. Namely, if a filament is loop-shaped and includes at least two attachment points for attaching the filament to the base part, then the first point may be identified with one of the two attachment points, and the second point may be identified with a point of the filament which has a maximum distance from the base part among all points of the filament. Furthermore, the maximum distance from the base part among all points of the filament may in this case be identified with the length of the filament.

According to an aspect of the disclosure, a filling factor of the voids or holes or the hollow structure lies between 50 % and 70 %. The filling factor is a ratio between a) an area or surface area of the voids or holes or the hollow structure and b) an area or surface area of the base part or the portion of the base part where the voids or holes or the hollow structure are provided. This filling factor leads to an increased flexibility and efficiency in gripping, grabbing, or grasping various objects.

Furthermore, a diameter of the voids or holes or the hollow structure can be adapted to or vary depending upon the object to be gripped, in order to further increase the gripping efficiency.

According to an aspect of the disclosure, a gripper system is provided, wherein the gripper system comprises a first gripper unit according to the disclosure and at least one of an opposing member and a second gripper unit according to the disclosure. Such gripper systems can be used to grip objects between the first gripper unit and the opposing member or the second gripper unit. In particular, the opposing member may be a conventional gripper unit, such as a plate in the simplest case, in order to reduce the costs of the gripper system, while the first gripper unit still provides all the technical advantages as described above. On the other hand, by providing at least two gripper units according to the disclosure, the gripping properties of the gripper system can be further improved because the advantages of both gripper units may add up and reinforce each other. For example, at least one of the gripper units may include a color sensor as described above, in order to detect the color of at least some or all of the filaments and/or at least a portion of the base part or the entire base part of the respective other gripper unit, e.g. an opposing gripper unit, and at least one or both gripper units may be controlled based on the detected color in order to improve the gripping properties of the gripper system as described above.

According to an aspect of the disclosure, a method of gripping an object by using a gripper system is provided, wherein the gripper system comprises a first gripper unit, preferably a gripper unit according to the disclosure, and at least one of an opposing member and a second gripper unit, preferably a gripper unit according to the disclosure, wherein the first gripper unit comprises a two-dimensional array of filaments, wherein the filaments comprise an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value, wherein preferably the first gripper unit has the same active material as the second gripper unit; wherein the method comprises: keeping and/or heating up the filaments above the second temperature; positioning the gripper system relative to the object such that the object lies between the first gripper unit and the at least one of the opposing member and the second gripper unit; reducing a distance between the first gripper unit and the at least one of the opposing member and the second gripper unit, such that at least some or all of the filaments are in contact with and/or pressed against the object; and optionally cooling down the filaments below the first temperature.

According to an aspect of the disclosure, a method of gripping an object by using a gripper system is provided, wherein the gripper system comprises a first gripper unit, preferably a gripper unit according to the disclosure, and at least one of an opposing member and a second gripper unit, preferably a gripper unit according to the disclosure, wherein the first gripper unit comprises a base part with a two-dimensional or three-dimensional array of voids or holes formed in the base part, wherein the base part comprises an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value, wherein preferably the first gripper unit has the same active material as the second gripper unit; wherein the method comprises: keeping and/or heating up the base part above the second temperature; positioning the gripper system relative to the object such that the object lies between the first gripper unit and the at least one of the opposing member and the second gripper unit; reducing a distance between the first gripper unit and the at least one of the opposing member and the second gripper unit, such that at least a portion of the base part is in contact with and/or pressed against the object; and optionally cooling down the base part below the first temperature.

Note that when the gripper system comprises a first gripper unit and a second gripper unit according to the disclosure, the step of keeping and/or heating up the filaments and/or the base part above the second temperature may comprise keeping and/or heating up the filaments and/or the base part of the first and/or second gripper unit above the second temperature; furthermore, the step of reducing a distance between the first gripper unit and the second gripper unit may comprise reducing the distance such that at least some or all of the filaments and/or the base part of the first and/or second gripper unit are in contact with and/or pressed against the object; furthermore, the step of cooling down the filaments and/or the base part below the first temperature may comprise cooling down the filaments and/or the base part of the first and/or second gripper unit below the first temperature.

This method has the same technical advantages as described for the gripper unit above. In particular, the two-dimensional array of filaments and/or the base part with the two-dimensional or three-dimensional array of voids or holes formed therein has an increased surface area, e.g. compared to a one-dimensional array. Hence, at least some or all of the filaments of the two-dimensional array of filaments and/or at least a portion of the base part or the entire base part may be in contact with and/or be pressed against the object, which allows for a firm grip of the object. In particular, when the temperature of the active material is below the first temperature, the Shore hardness value of the active material is greater than a first Shore hardness value. In this case, the filaments and/or the base part may exert a greater force on the object when the gripper unit is pressed against the object, and hence the method is particularly useful for gripping hard and/or robust or heavy objects.

On the other hand, when the temperature of the active material is above the second temperature, the Shore hardness value of the active material is lower than a second Shore hardness value, such that the filaments and/or the base part are more soft and/or flexible. As a consequence, the filaments and/or the base part may deform or change their shape more easily when the gripper unit is pressed against the object. In this case, the filaments and/or the base part may deform to a 3D shape that corresponds to or matches a shape of the object, thus providing a shape constraint or shape match for the object. Due to the soft and/or flexible filaments and/or the soft and/or flexible base part, the force exerted by the filaments and/or the base part on the object can be reduced, and hence the risk of damaging the object by the filaments and/or the base part can be reduced, such that the method is particularly useful for gripping soft and/or fragile or light objects. Furthermore, when the filaments and/or the base part are deformed as described above and the temperature is subsequently reduced below the first temperature, the filaments and/or the base part may freeze or stiffen in their deformed shape, such that the object becomes mechanically interlocked with the filaments and/or the base part, which leads to a particularly firm grip of the object and which saves energy especially if the first temperature or glass temperature lies above the ambient or surrounding temperature of the gripper unit. The method therefore leads to an increased flexibility and efficiency in gripping, grabbing, or grasping various objects.

The above method may optionally comprise the following additional steps, which can be performed after the steps mentioned above: increasing a distance between the first gripper unit and the at least one of the opposing member and the second gripper unit, such that the object is released from the gripper system; and heating up the filaments and/or the base part above the second temperature, such that the filaments and/or the base part restore their initial shape. After performing these additional method steps, the gripper system can be used again for gripping another object, e.g. an object of an other shape, size, weight, or material.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Fig. 1a shows schematically an embodiment of a gripper unit according to the disclosure; Fig. 1b is a three-dimensional representation of the gripper unit; Fig. 1c shows another embodiment of the gripper unit including a sub-array of first filaments and a sub-array of second filaments;
Figs. 2a to 2d show different embodiments of a base part according to the disclosure;
Figs. 3a to 3c show different embodiments of filaments according to the disclosure;
Fig. 4a and 4b show two embodiments of a gripper system with different actuation elements;
Fig. 5a and 5b show different embodiments of a gripper system according to the disclosure; Fig. 5c is a three-dimensional representation of a gripper system;
Fig. 6a to 6g illustrate different steps of a method of gripping an object according to the disclosure; and
Fig. 7 is a flow diagram for a method of gripping an object according to the disclosure.

### DETAILED DESCRIPTION OF THE EMBODIMENTS

Referring now to the drawings, wherein like reference numerals designate identical or corresponding parts throughout the several views.

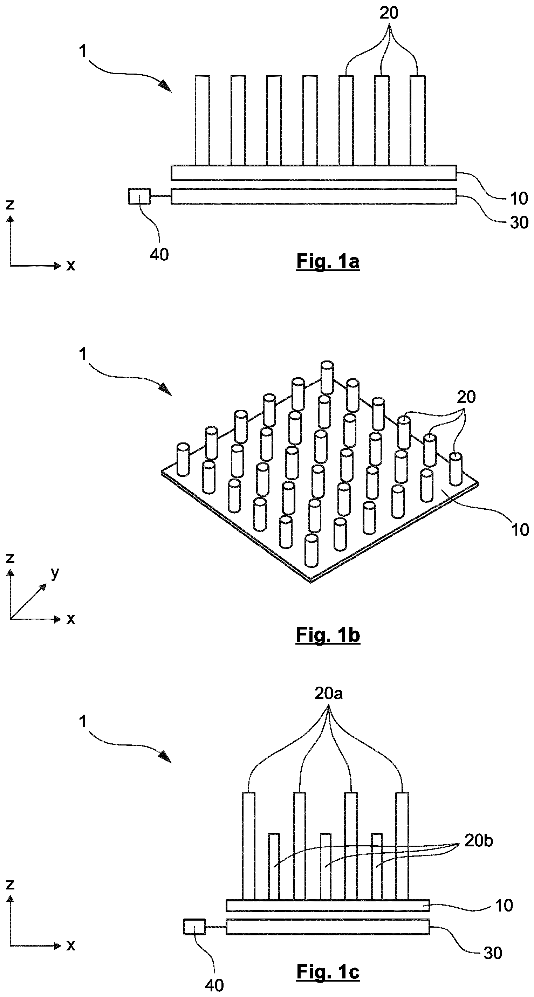

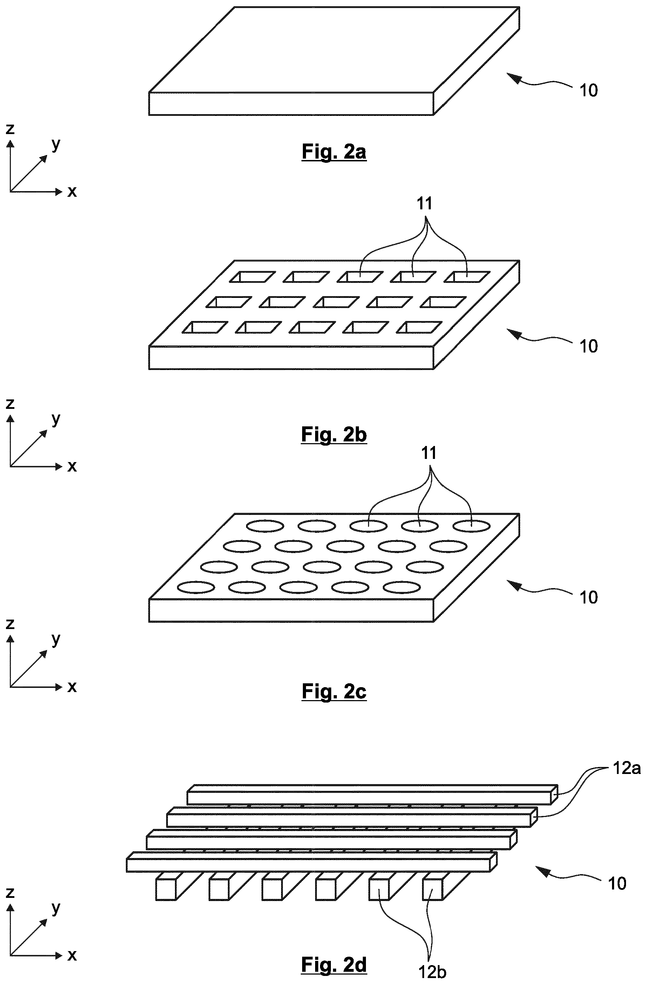

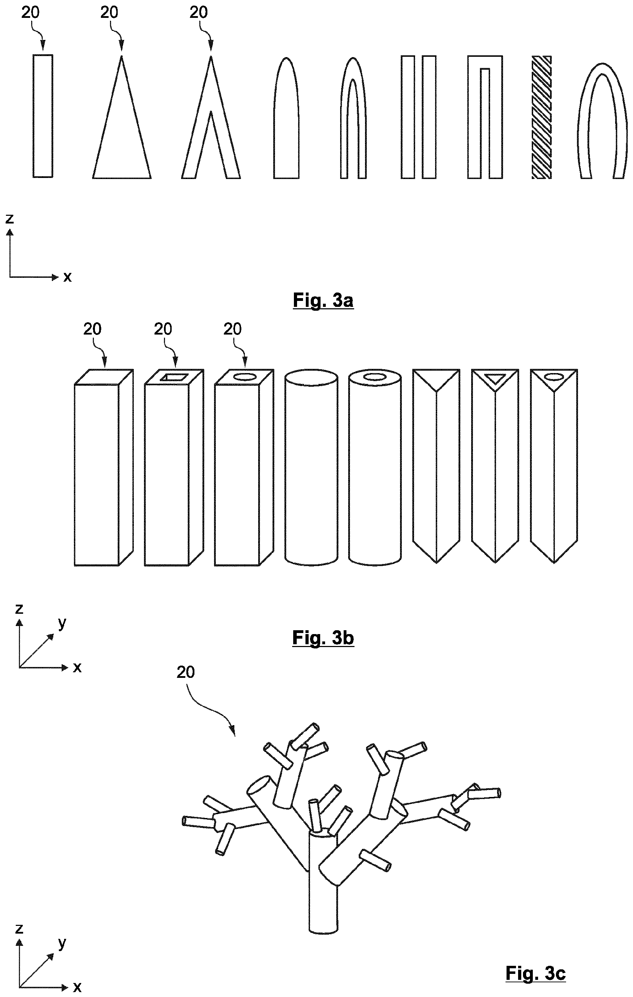

Figs. 1a schematically shows an embodiment of a gripper unit 1 according to the disclosure. The gripper unit 1 comprises a base part 10 and a two-dimensional array of filaments 20 arranged on the base part 10. In the embodiment shown in this figure, the base part 10 is flat and is oriented parallel to the x-axis and the y-axis. Furthermore, the filaments extend in the z-direction and are therefore perpendicular to the base part 10. The gripper unit 1 comprises an actuation element 30, which is arranged on the opposite side of the base part 10 than the filaments 20. The actuation element 30 is connected to a controller 40, which is configured to control the actuation element 30. Note that Fig. 1a as well as the other figures are only schematic, and hence the shape, size, cross-section, length, thickness, etc. of the filaments 20 as well as the base part 10 may be different than the ones shown in Fig. 1a (see Figs. 2a to 2d for different embodiments of the base part 10, and Figs. 3a to 3c for different embodiments of the filaments 20).

Fig. 1b is a three-dimensional representation of the gripper unit, which shows in particular the base part 10 and the array of filaments 20. In the specific embodiment shown in Fig. 1b, the array is a regular quadratic array of 6 by 6 filaments.

Fig. 1c schematically shows another embodiment of the gripper unit 1, wherein the array of filaments 20 comprises a sub-array of first filaments 20a and a sub-array of second filaments 20b. In this embodiment, the first filaments 20a have a greater length than the second filaments 20b. In addition, the first filaments 20a may e.g. comprise a different SMP material and have a different glass transition temperature than the second filaments 20b, as described above.

Figs. 2a to 2d show different embodiments of a base part 10 according to the disclosure. In particular, in Fig. 2a the base part 10 is flat and rectangular. In Fig. 2b, the base part 10 has the form of a perforated plate with rectangular holes 11 for fitting in filaments 20 with a rectangular cross-section. In Fig. 2b, the base part 10 has the form of a perforated plate with circular holes 11 for fitting in filaments 20 with a circular cross-section. In Fig. 2c the base part 10 has the form of a mesh with perpendicular threads 12a and 12b extending in the x- and y-direction, respectively; in this latter case, the filaments 20 may be fabricated by textile processing techniques such as embroidery or latch hooking on the mesh of the base part 10.

Figs. 3a to 3c show different embodiments of filaments 20 according to the disclosure. In particular, the filaments 20 shown in Fig. 3a have the following shapes (from left to right): pillar, cone, hollow cone, rounded pillar, rounded hollow pillar, open hollow pillar, closed hollow pillar, helical, loop-shaped. The hollow filaments 20 may be filled with a heating and/or cooling element or a thermally conductive material as described above. Fig. 3b is a three-dimensional representation of filaments 20 with various prism shapes. These prisms have the following cross sections: quadratic, quadratic with an inner quadratic recess, quadratic with an inner circular recess, circular, circular with inner circular recess, triangular, triangular with inner triangular recess, triangular with an inner circular recess. The filaments 20 whose cross section has an inner recess are hollow filaments 20, which may be filled with a heating and/or cooling element or a thermally conductive material as described above. Fig. 3c shows a filament with a dendritic shape. The filament can have an arbitrary number of branches. It may be filled or hollow similarly as the filaments 20 shown in Fig. 3a and 3b.

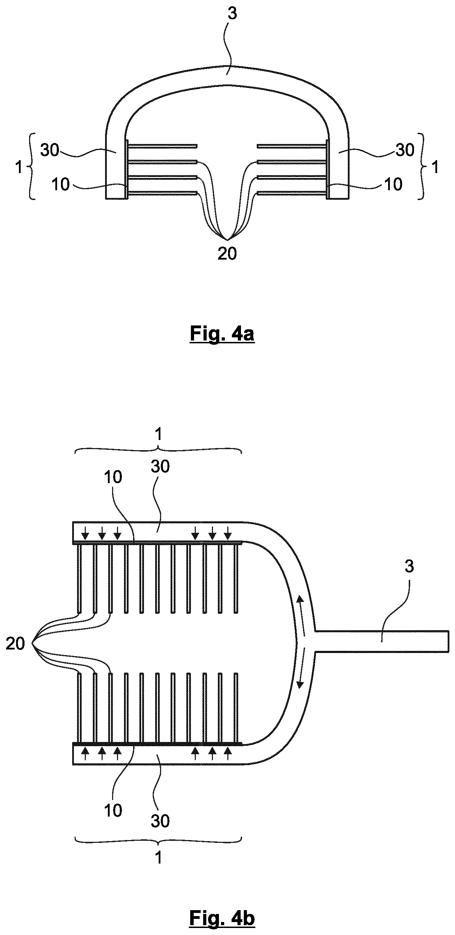

Fig. 4a shows a gripper system 1 according to the disclosure, which comprises two opposing gripper units 1 and a connecting part 3 connecting the two gripper units 1 with each other. In this embodiment, each of the two gripper units 1 comprises, as an actuation element 30, an integrated Peltier element 30, which is located on the opposite side of the base part 10 than the filaments 20 of the respective gripper unit 1. Fig. 4b shows a gripper system 1 according to the disclosure, which comprises two opposing gripper units 1 and a connecting part 3 connecting the two gripper units 1 with each other. In this embodiment, each of the two gripper units 1 comprises an actuation element 30 which is configured to heat up or cool down the filaments 20 by blowing hot or cold air through the base part 10 toward the filaments 20 of the respective gripper unit 1. Furthermore, in Fig. 4b, arrows indicate the direction of the air blow.

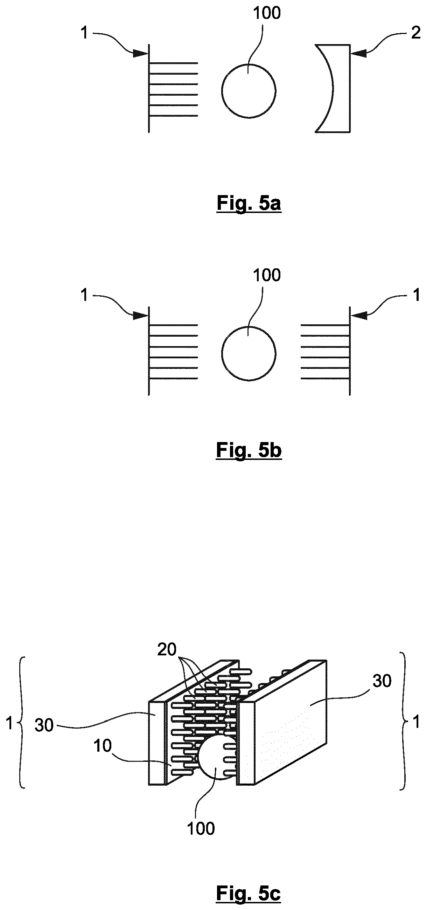

Fig. 5a shows an embodiment of a gripper system comprising a gripper unit 1 according to the disclosure and an opposing member 2, as well as an object 100 to be gripped. In Fig. 5a the opposing member 2 has a concave shape, which is particularly useful for gripping a convex object 100, but the opposing member 2 can have any shape, e.g. also be a flat plate. Fig. 5b shows an embodiment of a gripper system comprising two opposing gripper units 1 according to the disclosure, and an object 100 to be gripped by the gripper system. Fig. 5c is a three-dimensional representation of a gripper system according to the disclosure, comprising two opposing gripper units 1 according to the disclosure for gripping the object 100. While in Fig. 5a to 5c the object 100 is shown as a ball, the gripper system is adapted to grip objects of different shapes, as described above.

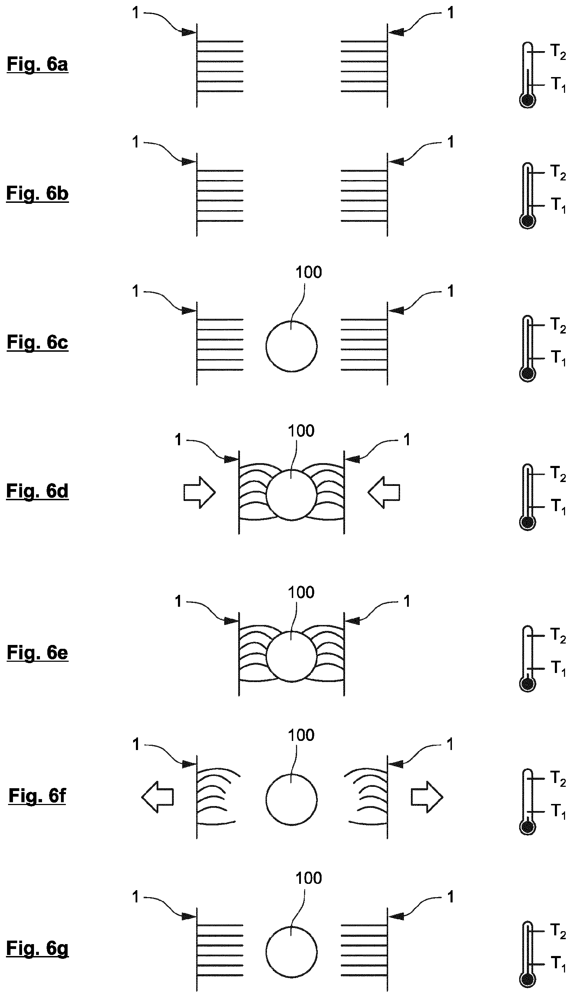

Fig. 6a to 6g illustrate a method of gripping an object according to the disclosure: Fig. 6a shows an initial configuration of a gripper system including a first gripper unit 1 and a second gripper unit 1 which opposes the first gripper unit 1. The temperature of the active material of the filaments 20 of both gripper units 1 may initially be between a first temperature T₁ and a second temperature T₂, e.g. at the ambient temperature of the gripping system. Fig. 6b shows the method step of heating up the filaments 20 above the second temperature T₂, such that the filaments 20 become soft and/or elastic (i.e. the Shore hardness value of the active material is lower than the second Shore hardness value); Fig. 6c shows the method step of positioning the gripper system relative to the object 100 such that the object lies between the first gripper unit 1 and the second gripper unit 1; Fig. 6d shows the method step of reducing a distance between the first gripper unit 1 and the second gripper unit 1, such that at least some of the filaments 20 are in contact with and/or pressed against the object 100; Fig. 6e shows the method step of cooling down the filaments 20 below the first temperature T₁, such that the filaments become hard and/or stiff (i.e. the Shore hardness value of the active material is greater than the first Shore hardness value); Fig. 6f shows the method step of increasing the distance between the first gripper unit 1 and the second gripper unit 1, such that the object 100 is released from the gripper system; Fig. 6g shows the method step of heating up the filaments 20 above the second temperature T₂, such that the filaments 20 restore their initial shape. Note that if the temperature of the active material of the filaments 20 is initially already above T₂, the step shown in Fig. 6b may be replaced by keeping the temperature of the filaments 20 above the second temperature T₂. Furthermore, each of the method steps shown in Fig. 6e, 6f, and 6g is optional.

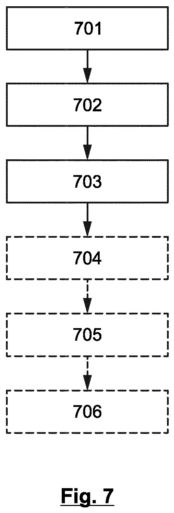

Fig. 7 is a flow diagram of a method for gripping an object according to the disclosure. It shows the following method steps: keeping and/or heating up the filaments 20 above the second temperature (701); positioning the gripper system relative to the object 100 such that the object 100 lies between the first gripper unit 1 and the at least one of the opposing member 2 and the second gripper unit 1 (702); reducing a distance between the first gripper unit 1 and the at least one of the opposing member 2 and the second gripper unit 1, such that at least some of the filaments 20 are in contact with and/or pressed against the object 100 (703); cooling down the filaments 20 below the first temperature (704); increasing the distance between the first gripper unit 1 and the at least one of the opposing member 2 and the second gripper unit 1, such that the object 100 is released from the gripper system (705); and heating up the filaments 20 above the second temperature T₂ (706). Note that each of the method steps 704 to 706 is optional.

Note that the present technology can also be configured as described below:
(1) Gripper unit for a gripper system, wherein the gripper unit comprises a base part, an actuation element, and a controller configured to control the actuation element,
   i) wherein:
      - the gripper unit comprises a two-dimensional array of filaments arranged on the base part, wherein the filaments comprise an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value; and
      - the actuation element is configured to heat up the filaments above the second temperature and/or to cool down the filaments below the first temperature, and/or
   ii) wherein:
      - a two-dimensional or three-dimensional array of voids or holes is formed in the base part, wherein the base part comprises an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value; and
      - the actuation element is configured to heat up the base part above the second temperature and/or to cool down the base part below the first temperature.
(2) Gripper unit according to (1), wherein the first temperature is equal to the second temperature.
(3) Gripper unit according to (1) or (2), wherein the active material is a shape-memory polymer, SMP, material, wherein preferably the first temperature and/or the second temperature is equal to a glass transition temperature of the SMP material.
(4) Gripper unit according to any one of (1) to (3), wherein at least some of the filaments and/or at least a portion of the base part further comprise a thermochromic material that has a first color if the temperature of the thermochromic material is below a third temperature and has a second color different from the first color if the temperature of the thermochromic material is above a fourth temperature; i) wherein the third temperature is lower than or equal to the first temperature and the first temperature is lower than or equal to the fourth temperature, and/or ii) wherein the third temperature is lower than or equal to the second temperature and the second temperature is lower than or equal to the fourth temperature.
(5) Gripper unit according to (4), wherein at least some of the filaments and/or at least a portion of the base part comprise a mixture of the active material with pigments of the thermochromic material.
(6) Gripper unit according to (4) or (5), wherein at least some of the filaments comprise an inner portion and a coating layer covering the inner portion, wherein the inner portion comprises the active material and the coating layer comprises the thermochromic material.
(7) Gripper unit according to any one of (1) to (6), further comprising a color sensor configured to detect a color of at least some of the filaments and/or at least a portion of the base part of the gripper unit and/or another gripper unit according to any one of the preceding claims, wherein preferably the controller is configured to control the actuation element based on a color detected by the color sensor.
(8) Gripper unit according to any one of (1) to (7), wherein at least some of the filaments and/or the base part comprise a heating and/or cooling element or a thermally conductive material.
(9) Gripper unit according to any one of (1) to (8), i) wherein the actuation element is a heat pump, or a Peltier element, or a joule heating thin film, or ii) wherein the actuation element is ii.1) configured to heat up the filaments and/or the base part by blowing air towards the filaments and/or the base part, wherein preferably the air has a temperature higher or effectively higher than the second temperature, and/or ii.2) configured to cool down the filaments and/or the base part by blowing air towards the filaments and/or the base part, wherein preferably the air has a temperature lower or effectively lower than the first temperature.
(10) Gripper unit according to any one of (1) to (9), wherein the array of filaments comprises a sub-array of first filaments and a sub-array of second filaments, wherein at least some of the first filaments have a different active material, different glass transition temperature of the SMP material, different Shore hardness value of the active material if the temperature of the active material is below the first temperature, different Shore hardness value of the active material if the temperature of the active material is above the second temperature, different thermochromic material, different color of the thermochromic material if the temperature of the thermochromic material is below the third temperature, different color of the thermochromic material if the temperature of the thermochromic material is above the fourth temperature, different shape, different length and/or different cross-section than at least some of the second filaments.
(11) Gripper unit according to (10), wherein a density of the first filaments is equal to a density of the second filaments at least on a common portion of the base part.
(12) Gripper unit according to (10) or (11), wherein a density of the first filaments is greater than a density of the second filaments on a first portion of the base part and a density of the first filaments is lower than a density of the second filaments on a second portion of the base part, wherein preferably the first portion is an inner portion of the base part and the second portion is an outer portion of the base part at least partly surrounding the inner portion.
(13) Gripper unit according to any one of (1) to (12), wherein each filament has a first end point attached to the base part and a second end point opposite to the first end point in a direction of the respective filament, and wherein the filaments have different lengths.
(14) Gripper unit according to any one of (1) to (13), wherein a two-dimensional or three-dimensional array of voids or holes is formed in the base part, wherein a ratio between an area of the voids or holes and an area of the base part lies between 50 % and 70 %.
(15) Gripper system comprising a first gripper unit according to any one of (1) to (14) and at least one of an opposing member and a second gripper unit according to any one of (1) to (14), wherein the gripper system is configured to grip an object between at least some of the filaments and/or at least a portion of the base part of the first gripper unit and the at least one of the opposing member and the second gripper unit, wherein preferably the first gripper unit has the same active material as the second gripper unit.
(16) Method of gripping an object by using a gripper system comprising a first gripper unit, preferably a gripper unit according to any one of (1) to (14), and at least one of an opposing member and a second gripper unit, preferably a gripper unit according to any one of (1) to (14),
   i) wherein the first gripper unit comprises a two-dimensional array of filaments, wherein the filaments comprise an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value, wherein preferably the first gripper unit has the same active material as the second gripper unit; wherein the method comprises:
      - keeping and/or heating up the filaments above the second temperature;
      - positioning the gripper system relative to the object such that the object lies between the first gripper unit and the at least one of the opposing member and the second gripper unit;
      - reducing a distance between the first gripper unit and the at least one of the opposing member and the second gripper unit, such that at least some of the filaments are in contact with and/or pressed against the object; and
      - optionally cooling down the filaments below the first temperature, and/or
   ii) wherein the first gripper unit comprises a base part with a two-dimensional or three-dimensional array of voids or holes formed in the base part, wherein the base part comprises an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value, wherein preferably the first gripper unit has the same active material as the second gripper unit; wherein the method comprises:
      - keeping and/or heating up the base part above the second temperature;
      - positioning the gripper system relative to the object such that the object lies between the first gripper unit and the at least one of the opposing member and the second gripper unit;
      - reducing a distance between the first gripper unit and the at least one of the opposing member and the second gripper unit, such that at least a portion of the base part is in contact with and/or pressed against the object; and
      - optionally cooling down the base part below the first temperature.

Thus, the foregoing discussion discloses and describes merely exemplary embodiments of the present disclosure. As will be understood by those skilled in the art, the present disclosure may be embodied in other specific forms without departing from the scope of the invention, as defined by the appended claims.

## Claims

1. Gripper unit (1) for a gripper system, wherein the gripper unit (1) comprises a base part (10), an actuation element (30), and a controller (40) configured to control the actuation element (30),
i) wherein:
- the gripper unit (1) comprises a two-dimensional array of filaments (20) arranged on the base part (10), wherein the filaments (20) comprise an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value; and
- the actuation element (30) is configured to heat up the filaments (20) above the second temperature and/or to cool down the filaments (20) below the first temperature, and/or
ii) wherein:
- a two-dimensional or three-dimensional array of voids or holes is formed in the base part (10), wherein the base part (10) comprises an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value; and
- the actuation element (30) is configured to heat up the base part (10) above the second temperature and/or to cool down the base part (10) below the first temperature,
**characterized in that**:
at least some of the filaments (20) and/or at least a portion of the base part (10) further comprise a thermochromic material that has a first color if the temperature of the thermochromic material is below a third temperature and has a second color different from the first color if the temperature of the thermochromic material is above a fourth temperature; a) wherein the third temperature is lower than or equal to the first temperature and the first temperature is lower than or equal to the fourth temperature, and/or b) wherein the third temperature is lower than or equal to the second temperature and the second temperature is lower than or equal to the fourth temperature.

2. Gripper unit (1) according to claim 1, wherein the first temperature is equal to the second temperature.

3. Gripper unit (1) according to claim 1 or 2, wherein the active material is a shape-memory polymer, SMP, material, wherein preferably the first temperature and/or the second temperature is equal to a glass transition temperature of the SMP material.

4. Gripper unit (1) according to any one of claims 1 to 3, wherein at least some of the filaments (20) and/or at least a portion of the base part (10) comprise a mixture of the active material with pigments of the thermochromic material.

5. Gripper unit (1) according to any one of claims 1 to 4, wherein at least some of the filaments (20) comprise an inner portion and a coating layer covering the inner portion, wherein the inner portion comprises the active material and the coating layer comprises the thermochromic material.

6. Gripper unit (1) according to any one of the preceding claims, further comprising a color sensor configured to detect a color of at least some of the filaments (20) and/or at least a portion of the base part (10) of the gripper unit (1), wherein preferably the controller (40) is configured to control the actuation element (30) based on a color detected by the color sensor.

7. Gripper unit (1) according to any one the preceding claims, wherein at least some of the filaments (20) and/or the base part (10) comprise a heating and/or cooling element or a thermally conductive material.

8. Gripper unit (1) according to any one of the preceding claims, i) wherein the actuation element (30) is a heat pump, or a Peltier element (30), or a joule heating thin film, or ii) wherein the actuation element (30) is ii.1) configured to heat up the filaments (20) and/or the base part (10) by blowing air towards the filaments (20) and/or the base part (10), wherein preferably the air has a temperature higher or effectively higher than the second temperature, and/or ii.2) configured to cool down the filaments (20) and/or the base part (10) by blowing air towards the filaments (20) and/or the base part (10), wherein preferably the air has a temperature lower or effectively lower than the first temperature.

9. Gripper unit (1) according to any one of the preceding claims, wherein the array of filaments (20) comprises a sub-array of first filaments (20a) and a sub-array of second filaments (20b), wherein at least some of the first filaments (20a) have a different active material, different glass transition temperature of the SMP material, different Shore hardness value of the active material if the temperature of the active material is below the first temperature, different Shore hardness value of the active material if the temperature of the active material is above the second temperature, different thermochromic material, different color of the thermochromic material if the temperature of the thermochromic material is below the third temperature, different color of the thermochromic material if the temperature of the thermochromic material is above the fourth temperature, different shape, different length and/or different cross-section than at least some of the second filaments (20b).

10. Gripper unit (1) according to claim 9, wherein a density of the first filaments (20a) is equal to a density of the second filaments (20b) at least on a common portion of the base part (10).

11. Gripper unit (1) according to claim 9 or 10, wherein a density of the first filaments (20a) is greater than a density of the second filaments (20b) on a first portion of the base part (10) and a density of the first filaments (20a) is lower than a density of the second filaments (20b) on a second portion of the base part (10), wherein preferably the first portion is an inner portion of the base part (10) and the second portion is an outer portion of the base part (10) at least partly surrounding the inner portion.

12. Gripper unit (1) according to any one of the preceding claims, wherein a two-dimensional or three-dimensional array of voids or holes is formed in the base part (10), wherein the base part (10) comprises an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value, and wherein a ratio between an area of the voids or holes and an area of the base part (10) lies between 50 % and 70 %.

13. Gripper unit (1) for a gripper system, wherein the gripper unit (1) comprises a base part (10), an actuation element (30), and a controller (40) configured to control the actuation element (30),
i) wherein:
- the gripper unit (1) comprises a two-dimensional array of filaments (20) arranged on the base part (10), wherein the filaments (20) comprise an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value; and
- the actuation element (30) is configured to heat up the filaments (20) above the second temperature and/or to cool down the filaments (20) below the first temperature, and/or
ii) wherein:
- a two-dimensional or three-dimensional array of voids or holes is formed in the base part (10), wherein the base part (10) comprises an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value; and
- the actuation element (30) is configured to heat up the base part (10) above the second temperature and/or to cool down the base part (10) below the first temperature,
**characterized in that**:
the gripper unit (1) further comprises a color sensor configured to detect a color of at least some of the filaments (20) and/or at least a portion of the base part (10) of another gripper unit (1) according to any one of the preceding claims, wherein preferably the controller (40) is configured to control the actuation element (30) of the other gripper unit based on the color detected by the color sensor.

14. Gripper system comprising a first gripper unit (1) according to any one of the preceding claims and at least one of an opposing member (2) and a second gripper unit (1) according to any one of the preceding claims, wherein the gripper system is configured to grip an object (100) between at least some of the filaments (20) and/or at least a portion of the base part (10) of the first gripper unit (1) and the at least one of the opposing member (2) and the second gripper unit (1), wherein preferably the first gripper unit (1) has the same active material as the second gripper unit (1).

15. Method of gripping an object (100) by using a gripper system comprising a first gripper unit (1) being a gripper unit (1) according to any one of claims 1 to 13, and at least one of an opposing member (2) and a second gripper unit (1), preferably a gripper unit (1) according to any one of claims 1 to 13,
i) wherein the first gripper unit (1) comprises a two-dimensional array of filaments (20), wherein the filaments (20) comprise an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value, wherein preferably the first gripper unit (1) has the same active material as the second gripper unit (1); wherein the method comprises:
- keeping and/or heating up the filaments (20) above the second temperature;
- positioning the gripper system relative to the object (100) such that the object (100) lies between the first gripper unit (1) and the at least one of the opposing member (2) and the second gripper unit (1);
- reducing a distance between the first gripper unit (1) and the at least one of the opposing member (2) and the second gripper unit (1), such that at least some of the filaments (20) are in contact with and/or pressed against the object (100); and
- optionally cooling down the filaments (20) below the first temperature, and/or
ii) wherein the first gripper unit (1) comprises a base part (10) with a two-dimensional or three-dimensional array of voids or holes formed in the base part (10), wherein the base part (10) comprises an active material that has a Shore hardness value greater than a first Shore hardness value if the temperature of the active material is below a first temperature and has a Shore hardness value lower than a second Shore hardness value if the temperature of the active material is above a second temperature, wherein the first temperature is lower than or equal to the second temperature, wherein the first Shore hardness value is greater than or equal to the second Shore hardness value, wherein preferably the first gripper unit (1) has the same active material as the second gripper unit (1); wherein the method comprises:
- keeping and/or heating up the base part (10) above the second temperature;
- positioning the gripper system relative to the object (100) such that the object (100) lies between the first gripper unit (1) and the at least one of the opposing member (2) and the second gripper unit (1);
- reducing a distance between the first gripper unit (1) and the at least one of the opposing member (2) and the second gripper unit (1), such that at least a portion of the base part (10) is in contact with and/or pressed against the object (100); and
- optionally cooling down the base part (10) below the first temperature.

## Patentansprüche

1. Greifereinheit (1) für ein Greifersystem, wobei die Greifereinheit (1) ein Sockelteil (10), ein Betätigungselement (30) und eine Steuereinrichtung (40) umfasst, die konfiguriert ist, um das Betätigungselement (30) zu steuern,
i) wobei:
- die Greifereinheit (1) eine zweidimensionale Anordnung von Filamenten (20) umfasst, die auf dem Sockelteil (10) angeordnet sind, wobei die Filamente (20) ein aktives Material umfassen, das einen Shore-Härtewert größer als einen ersten Shore-Härtewert aufweist, falls die Temperatur des aktiven Materials unter einer ersten Temperatur liegt, und einen Shore-Härtewert niedriger als einen zweiten Shore-Härtewert aufweist, falls die Temperatur des aktiven Materials über einer zweiten Temperatur liegt, wobei die erste Temperatur niedriger als oder gleich der zweiten Temperatur ist, wobei der erste Shore-Härtewert größer als oder gleich dem zweiten Shore-Härtewert ist; und
- das Betätigungselement (30) konfiguriert ist, um die Filamente (20) über die zweite Temperatur zu erhitzen und/oder um die Filamente (20) unter die erste Temperatur abzukühlen, und/oder
ii) wobei:
- eine zweidimensionale oder dreidimensionale Anordnung von Hohlräumen oder Löchern in dem Sockelteil (10) ausgebildet ist, wobei das Sockelteil (10) ein aktives Material umfasst, das einen Shore-Härtewert größer als einen ersten Shore-Härtewert aufweist, falls die Temperatur des aktiven Materials unter einer ersten Temperatur liegt, und einen Shore-Härtewert niedriger als einen zweiten Shore-Härtewert aufweist, falls die Temperatur des aktiven Materials über einer zweiten Temperatur liegt, wobei die erste Temperatur niedriger als oder gleich der zweiten Temperatur ist, wobei der erste Shore-Härtewert größer als oder gleich dem zweiten Shore-Härtewert ist; und
- das Betätigungselement (30) konfiguriert ist, um das Sockelteil (10) über die zweite Temperatur zu erhitzen und/oder das Sockelteil (10) unter die erste Temperatur abzukühlen,
**dadurch gekennzeichnet, dass:**
mindestens einige der Filamente (20) und/oder mindestens ein Abschnitt des Sockelteils (10) ferner ein thermochromes Material umfassen, das eine erste Farbe aufweist, falls die Temperatur des thermochromen Materials unter einer dritten Temperatur liegt, und eine zweite Farbe aufweist, die sich von der ersten Farbe unterscheidet, falls die Temperatur des thermochromen Materials über einer vierten Temperatur liegt; a) wobei die dritte Temperatur niedriger als oder gleich der ersten Temperatur ist und die erste Temperatur niedriger als oder gleich der vierten Temperatur ist, und/oder b) wobei die dritte Temperatur niedriger als oder gleich der zweiten Temperatur ist und die zweite Temperatur niedriger als oder gleich der vierten Temperatur ist.

2. Greifereinheit (1) nach Anspruch 1, wobei die erste Temperatur gleich der zweiten Temperatur ist.

3. Greifereinheit (1) nach Anspruch 1 oder 2, wobei das aktive Material ein Formgedächtnispolymermaterial, SMP-Material, ist, wobei vorzugsweise die erste Temperatur und/oder die zweite Temperatur gleich einer Glasübergangstemperatur des SMP-Materials ist.

4. Greifereinheit (1) nach einem der Ansprüche 1 bis 3, wobei mindestens einige der Filamente (20) und/oder mindestens ein Abschnitt des Sockelteils (10) eine Mischung des aktiven Materials mit Pigmenten des thermochromen Materials umfassen.

5. Greifereinheit (1) nach einem der Ansprüche 1 bis 4, wobei mindestens einige der Filamente (20) einen inneren Abschnitt und eine Beschichtungsschicht umfassen, die den inneren Abschnitt bedeckt, wobei der innere Abschnitt das aktive Material umfasst und die Beschichtungsschicht das thermochrome Material umfasst.

6. Greifereinheit (1) nach einem der vorstehenden Ansprüche, ferner umfassend einen Farbsensor, der konfiguriert ist, um eine Farbe von mindestens einigen der Filamente (20) und/oder mindestens einem Abschnitt des Sockelteils (10) der Greifereinheit (1) zu erfassen, wobei vorzugsweise die Steuereinrichtung (40) konfiguriert ist, um das Betätigungselement (30) basierend auf einer Farbe zu steuern, die durch den Farbsensor erfasst wird.

7. Greifereinheit (1) nach einem der vorstehenden Ansprüche, wobei mindestens einige der Filamente (20) und/oder das Sockelteil (10) ein Heiz-und/oder Kühlelement oder ein thermisch leitfähiges Material umfassen.

8. Greifereinheit (1) nach einem der vorstehenden Ansprüche, i) wobei das Betätigungselement (30) eine Heizpumpe oder ein Peltier-Element (30) oder ein Joule-Heizungsfilm ist, oder ii) wobei das Betätigungselement (30) ii 1) konfiguriert ist, um die Filamente (20) und/oder das Sockelteil (10) durch Blasen von Luft in Richtung der Filamente (20) und/oder des Sockelteils (10) zu erhitzen, wobei vorzugsweise die Luft eine Temperatur aufweist, die höher oder effektiv höher als die zweite Temperatur ist, und/oder ii.2) konfiguriert ist, um die Filamente (20) und/oder das Sockelteil (10) durch Blasen von Luft in Richtung der Filamente (20) und/oder des Sockelteils (10) abzukühlen, wobei vorzugsweise die Luft eine Temperatur aufweist, die niedriger oder effektiv niedriger als die erste Temperatur ist.

9. Greifereinheit (1) nach einem der vorstehenden Ansprüche, wobei die Anordnung von Filamenten (20) eine Unteranordnung von ersten Filamenten (20a) und eine Unteranordnung von zweiten Filamenten (20b) umfasst, wobei mindestens einige der ersten Filamente (20a) ein unterschiedliches aktives Material, eine unterschiedliche Glasübergangstemperatur des SMP-Materials, einen unterschiedlichen Shore-Härtewert des aktiven Materials, falls die Temperatur des aktiven Materials unter der ersten Temperatur liegt, eine unterschiedlichen Shore-Härtewert des aktiven Materials, falls die Temperatur des aktiven Materials über der zweiten Temperatur liegt, ein unterschiedliches thermochromes Material, eine unterschiedliche Farbe des thermochromen Materials, falls die Temperatur des thermochromen Materials unter der dritten Temperatur liegt, eine unterschiedliche Farbe des thermochromen Materials, falls die Temperatur des thermochromen Materials über der vierten Temperatur liegt, eine unterschiedliche Form, eine unterschiedliche Länge und/oder einen unterschiedlichen Querschnitt als mindestens einige der zweiten Filamente (20b) aufweisen.

10. Greifereinheit (1) nach Anspruch 9, wobei eine Dichte der ersten Filamente (20a) gleich einer Dichte der zweiten Filamente (20b) mindestens an einem gemeinsamen Abschnitt des Sockelteils (10) ist.

11. Greifereinheit (1) nach Anspruch 9 oder 10, wobei eine Dichte der ersten Filamente (20a) größer als eine Dichte der zweiten Filamente (20b) auf einem ersten Abschnitt des Sockelteils (10) ist und eine Dichte der ersten Filamente (20a) geringer als eine Dichte der zweiten Filamente (20b) auf einem zweiten Abschnitt des Sockelteils (10) ist, wobei vorzugsweise der erste Abschnitt ein innerer Abschnitt des Sockelteils (10) ist und der zweite Abschnitt ein äußerer Abschnitt des Sockelteils (10) ist, der den inneren Abschnitt mindestens teilweise umgibt.

12. Greifereinheit (1) nach einem der vorstehenden Ansprüche, wobei eine zweidimensionale oder dreidimensionale Anordnung von Hohlräumen oder Löchern in dem Sockelteil (10) ausgebildet ist, wobei das Sockelteil (10) ein aktives Material umfasst, das einen Shore-Härtewert größer als einen ersten Shore-Härtewert aufweist, falls die Temperatur des aktiven Materials unter einer ersten Temperatur liegt, und einen Shore-Härtewert niedriger als einen zweiten Shore-Härtewert aufweist, falls die Temperatur des aktiven Materials über einer zweiten Temperatur liegt, wobei die erste Temperatur niedriger als oder gleich der zweiten Temperatur ist, wobei der erste Shore-Härtewert größer als oder gleich dem zweiten Shore-Härtewert ist, und wobei ein Verhältnis zwischen einer Fläche der Hohlräume oder Löcher und einer Fläche des Sockelteils (10) zwischen 50 % und 70 % liegt.

13. Greifereinheit (1) für ein Greifersystem, wobei die Greifereinheit (1) ein Sockelteil (10), ein Betätigungselement (30) und eine Steuereinrichtung (40) umfasst, die konfiguriert ist, um das Betätigungselement (30) zu steuern,
i) wobei:
- die Greifereinheit (1) eine zweidimensionale Anordnung von Filamenten (20) umfasst, die auf dem Sockelteil (10) angeordnet sind, wobei die Filamente (20) ein aktives Material umfassen, das einen Shore-Härtewert größer als einen ersten Shore-Härtewert aufweist, falls die Temperatur des aktiven Materials unter einer ersten Temperatur liegt, und einen Shore-Härtewert niedriger als einen zweiten Shore-Härtewert aufweist, falls die Temperatur des aktiven Materials über einer zweiten Temperatur liegt, wobei die erste Temperatur niedriger als oder gleich der zweiten Temperatur ist, wobei der erste Shore-Härtewert größer als oder gleich dem zweiten Shore-Härtewert ist; und
- das Betätigungselement (30) konfiguriert ist, um die Filamente (20) über die zweite Temperatur zu erhitzen und/oder um die Filamente (20) unter die erste Temperatur abzukühlen, und/oder
ii) wobei:
- eine zweidimensionale oder dreidimensionale Anordnung von Hohlräumen oder Löchern in dem Sockelteil (10) ausgebildet ist, wobei das Sockelteil (10) ein aktives Material umfasst, das einen Shore-Härtewert größer als einen ersten Shore-Härtewert aufweist, falls die Temperatur des aktiven Materials unter einer ersten Temperatur liegt, und einen Shore-Härtewert niedriger als einen zweiten Shore-Härtewert aufweist, falls die Temperatur des aktiven Materials über einer zweiten Temperatur liegt, wobei die erste Temperatur niedriger als oder gleich der zweiten Temperatur ist, wobei der erste Shore-Härtewert größer als oder gleich dem zweiten Shore-Härtewert ist; und
- das Betätigungselement (30) konfiguriert ist, um das Sockelteil (10) über die zweite Temperatur zu erhitzen und/oder das Sockelteil (10) unter die erste Temperatur abzukühlen,
**dadurch gekennzeichnet, dass:**
die Greifereinheit (1) ferner einen Farbsensor umfasst, der konfiguriert ist, um eine Farbe von mindestens einigen der Filamente (20) und/oder mindestens einem Abschnitt des Sockelteils (10) einer anderen Greifereinheit (1) nach einem der vorstehenden Ansprüche zu erfassen, wobei vorzugsweise die Steuereinrichtung(40) konfiguriert ist, um das Betätigungselement (30) der anderen Greifereinheit basierend auf der Farbe zu steuern, die durch den Farbsensor erfasst wird.

14. Greifersystem, umfassend eine erste Greifereinheit (1) nach einem der vorstehenden Ansprüche und mindestens eines von einem Gegenelement (2) und einer zweiten Greifereinheit (1) nach einem der vorstehenden Ansprüche, wobei das Greifersystem konfiguriert ist, um ein Objekt (100) zwischen mindestens einigen der Filamente (20) und/oder mindestens einem Abschnitt des Sockelteils (10) der ersten Greifereinheit (1) und dem mindestens einen von dem Gegenelement (2) und der zweiten Greifereinheit (1) zu greifen, wobei vorzugsweise die erste Greifereinheit (1) das gleiche aktive Material wie die zweite Greifereinheit (1) aufweist.

15. Verfahren zum Greifen eines Objekts (100) durch Verwenden eines Greifersystems, umfassend eine erste Greifereinheit (1), die eine Greifereinheit (1) nach einem der Ansprüche 1 bis 13 ist, und mindestens eines von einem Gegenelement (2) und einer zweiten Greifereinheit (1), vorzugsweise eine Greifereinheit (1) nach einem der Ansprüche 1 bis 13,
i) wobei die erste Greifereinheit (1) eine zweidimensionale Anordnung von Filamenten (20) umfasst, wobei die Filamente (20) ein aktives Material umfassen, das einen Shore-Härtewert größer als einen ersten Shore-Härtewert aufweist, falls die Temperatur des aktiven Materials unter einer ersten Temperatur liegt, und einen Shore-Härtewert niedriger als einen zweiten Shore-Härtewert aufweist, falls die Temperatur des aktiven Materials über einer zweiten Temperatur liegt, wobei die erste Temperatur niedriger als oder gleich der zweiten Temperatur ist, wobei der erste Shore-Härtewert größer als oder gleich dem zweiten Shore-Härtewert ist, wobei vorzugsweise die erste Greifereinheit (1) das gleiche aktive Material wie die zweite Greifereinheit (1) aufweist; wobei das Verfahren umfasst:
- Halten und/oder Erhitzen der Filamente (20) über die zweite Temperatur;
- Positionieren des Greifersystems relativ zu dem Objekt (100) derart, dass das Objekt (100) zwischen der ersten Greifereinheit (1) und dem mindestens einen von dem gegenüberliegenden Element (2) und der zweiten Greifereinheit (1) liegt;
- Verringern eines Abstands zwischen der ersten Greifereinheit (1) und dem mindestens einen von dem gegenüberliegenden Element (2) und der zweiten Greifereinheit (1) derart, dass mindestens einige der Filamente (20) in Kontakt mit dem Objekt (100) stehen und/oder dagegen gedrückt werden; und
- wahlweise Abkühlen der Filamente (20) unter die erste Temperatur, und/oder
ii) wobei die erste Greifereinheit (1) ein Sockelteil (10) mit einer zweidimensionalen oder dreidimensionalen Anordnung von Hohlräumen oder Löchern umfasst, die in dem Sockelteil (10) ausgebildet sind, wobei das Sockelteil (10) ein aktives Material umfasst, das einen Shore-Härtewert größer als einen ersten Shore-Härtewert aufweist, falls die Temperatur des aktiven Materials unter einer ersten Temperatur liegt, und einen Shore-Härtewert kleiner als einen zweiten Shore-Härtewert aufweist, falls die Temperatur des aktiven Materials über einer zweiten Temperatur liegt, wobei die erste Temperatur kleiner als oder gleich der zweiten Temperatur ist, wobei der erste Shore-Härtewert größer als oder gleich dem zweiten Shore-Härtewert ist, wobei vorzugsweise die erste Greifereinheit (1) dasselbe aktive Material wie die zweite Greifereinheit (1) aufweist; wobei das Verfahren umfasst:
- Halten und/oder Erhitzen des Sockelteils (10) über die zweite Temperatur;
- Positionieren des Greifersystems relativ zu dem Objekt (100) derart, dass das Objekt (100) zwischen der ersten Greifereinheit (1) und dem mindestens einen von dem gegenüberliegenden Element (2) und der zweiten Greifereinheit (1) liegt;
- Verringern eines Abstands zwischen der ersten Greifereinheit (1) und dem mindestens einen von dem gegenüberliegenden Element (2) und der zweiten Greifereinheit (1) derart, dass mindestens ein Abschnitt des Sockelteils (10) in Kontakt mit dem Objekt (100) steht und/oder dagegen gedrückt wird; und
- wahlweise Abkühlen des Sockelteils (10) unter die erste Temperatur.

## Revendications

1. Unité de préhension (1) pour un système de préhension, dans laquelle l'unité de préhension (1) comprend une partie base (10), un élément d'actionnement (30) et un dispositif de commande (40) configuré pour commander l'élément d'actionnement (30),
i) dans laquelle :
- l'unité de préhension (1) comprend un réseau bidimensionnel de filaments (20) agencés sur la partie base (10), dans laquelle les filaments (20) comprennent un matériau actif qui présente une valeur de dureté Shore supérieure à une première valeur de dureté Shore si la température du matériau actif est inférieure à une première température et présente une valeur de dureté Shore inférieure à une seconde valeur de dureté Shore si la température du matériau actif est supérieure à une deuxième température, dans laquelle la première température est inférieure ou égale à la deuxième température, dans laquelle la première valeur de dureté Shore est supérieure ou égale à la seconde valeur de dureté Shore ; et
- l'élément d'actionnement (30) est conçu pour chauffer les filaments (20) au-dessus de la deuxième température et/ou pour refroidir les filaments (20) en dessous de la première température, et/ou
ii) dans laquelle :
- un réseau bidimensionnel ou tridimensionnel de vides ou de trous est formé dans la partie base (10), dans laquelle la partie base (10) comprend un matériau actif qui présente une valeur de dureté Shore supérieure à une première valeur de dureté Shore si la température du matériau actif est inférieure à une première température et présente une valeur de dureté Shore inférieure à une seconde valeur de dureté Shore si la température du matériau actif est supérieure à une deuxième température, dans laquelle la première température est inférieure ou égale à la deuxième température, dans laquelle la première valeur de dureté Shore est supérieure ou égale à la seconde valeur de dureté Shore ; et
- l'élément d'actionnement (30) est conçu pour chauffer la partie base (10) au-dessus de la deuxième température et/ou pour refroidir la partie base (10) en dessous de la première température,
**caractérisée en ce que** :
au moins certains des filaments (20) et/ou au moins une partie de la partie base (10) comprennent en outre un matériau thermochromique qui présente une première couleur si la température du matériau thermochromique est inférieure à une troisième température et présente une seconde couleur différente de la première couleur si la température du matériau thermochromique est au-dessus d'une quatrième température ; a) dans laquelle la troisième température est inférieure ou égale à la première température et la première température est inférieure ou égale à la quatrième température, et/ou b) dans laquelle la troisième température est inférieure ou égale à la deuxième température et la deuxième température est inférieure ou égale à la quatrième température.

2. Unité de préhension (1) selon la revendication 1, dans laquelle la première température est égale à la deuxième température.

3. Unité de préhension (1) selon la revendication 1 ou 2, dans laquelle le matériau actif est un matériau polymère à mémoire de forme, SMP, dans laquelle de préférence la première température et/ou la deuxième température sont égales à une température de transition vitreuse du matériau SMP.

4. Unité de préhension (1) selon l'une quelconque des revendications 1 à 3, dans laquelle au moins certains des filaments (20) et/ou au moins une partie de la partie base (10) comprennent un mélange du matériau actif avec des pigments du matériau thermochromique.

5. Unité de préhension (1) selon l'une quelconque des revendications 1 à 4, dans laquelle au moins certains des filaments (20) comprennent une partie interne et une couche de revêtement recouvrant la partie interne, dans laquelle la partie interne comprend le matériau actif et la couche de revêtement comprend le matériau thermochromique.

6. Unité de préhension (1) selon l'une quelconque des revendications précédentes, comprenant en outre un détecteur de couleur configuré pour détecter une couleur d'au moins certains des filaments (20) et/ou au moins une partie de la partie base (10) de l'unité de préhension (1), dans laquelle de préférence le dispositif de commande (40) est configuré pour commander l'élément d'actionnement (30) sur la base d'une couleur détectée par le détecteur de couleur.

7. Unité de préhension (1) selon l'une quelconque des revendications précédentes, dans laquelle au moins certains des filaments (20) et/ou la partie base (10) comprennent un élément de chauffage et/ou de refroidissement ou un matériau thermoconducteur.

8. Unité de préhension (1) selon l'une quelconque des revendications précédentes, i) dans laquelle l'élément d'actionnement (30) est une pompe à chaleur, ou un élément Peltier (30), ou un film mince de chauffage par effet Joule, ou ii) dans laquelle l'élément d'actionnement (30) est ii. 1) conçu pour chauffer les filaments (20) et/ou la partie base (10) en soufflant de l'air vers les filaments (20) et/ou la partie base (10), dans laquelle de préférence l'air présente une température supérieure ou effectivement supérieure à la deuxième température, et/ou ii.2) conçu pour refroidir les filaments (20) et/ou la partie base (10) en soufflant de l'air vers les filaments (20) et/ou la partie base (10), dans laquelle, de préférence, l'air présente une température inférieure ou effectivement inférieure à la première température.

9. Unité de préhension (1) selon l'une quelconque des revendications précédentes, dans laquelle le réseau de filaments (20) comprend un sous-réseau de premiers filaments (20a) et un sous-réseau de seconds filaments (20b), dans laquelle au moins certains des premiers filaments (20a) présentent un matériau actif différent, une température de transition vitreuse différente du matériau SMP, une valeur de dureté Shore différente du matériau actif si la température du matériau actif est inférieure à la première température, une valeur de dureté Shore différente du matériau actif si la température du matériau actif est supérieure à la deuxième température, un matériau thermochromique différent, une couleur différente du matériau thermochromique si la température du matériau thermochromique est inférieure à la troisième température, une couleur différente du matériau thermochromique si la température du matériau thermochromique est supérieure à la quatrième température, une forme différente, une longueur différente et/ou une section transversale différente de celle d'au moins certains des deuxièmes filaments (20b).

10. Unité de préhension (1) selon la revendication 9, dans laquelle une densité des premiers filaments (20a) est égale à une densité des seconds filaments (20b) au moins sur une partie commune de la partie base (10).

11. Unité de préhension (1) selon la revendication 9 ou 10, dans laquelle une densité des premiers filaments (20a) est supérieure à une densité des seconds filaments (20b) sur une première partie de la partie base (10) et une densité des premiers filaments (20a) est inférieure à une densité des seconds filaments (20b) sur une seconde partie de la partie base (10), dans laquelle, de préférence, la première partie est une partie interne de la partie base (10) et la seconde partie est une partie externe de la partie base (10) entourant au moins partiellement la partie interne.

12. Unité de préhension (1) selon l'une quelconque des revendications précédentes, dans laquelle un réseau bidimensionnel ou tridimensionnel de vides ou de trous est formé dans la partie base (10), dans laquelle la partie base (10) comprend un matériau actif qui présente une valeur de dureté Shore supérieure à une première valeur de dureté Shore si la température du matériau actif est inférieure à une première température et présente une valeur de dureté Shore inférieure à une seconde valeur de dureté Shore si la température du matériau actif est supérieure à une deuxième température, dans laquelle la première température est inférieure ou égale à la deuxième température, dans laquelle la première valeur de dureté Shore est supérieure ou égale à la seconde valeur de dureté Shore, et dans laquelle un rapport entre une surface des vides ou des trous et une surface de la partie base (10) se situe entre 50 % et 70 %.

13. Unité de préhension (1) pour un système de préhension, dans laquelle l'unité de préhension (1) comprend une partie base (10), un élément d'actionnement (30) et un dispositif de commande (40) configuré pour commander l'élément d'actionnement (30),
i) dans laquelle :
- l'unité de préhension (1) comprend un réseau bidimensionnel de filaments (20) agencés sur la partie base (10), dans laquelle les filaments (20) comprennent un matériau actif qui présente une valeur de dureté Shore supérieure à une première valeur de dureté Shore si la température du matériau actif est inférieure à une première température et présente une valeur de dureté Shore inférieure à une seconde valeur de dureté Shore si la température du matériau actif est supérieure à une deuxième température, dans laquelle la première température est inférieure ou égale à la deuxième température, dans laquelle la première valeur de dureté Shore est supérieure ou égale à la seconde valeur de dureté Shore ; et
- l'élément d'actionnement (30) est conçu pour chauffer les filaments (20) au-dessus de la deuxième température et/ou pour refroidir les filaments (20) en dessous de la première température, et/ou
ii) dans laquelle :
- un réseau bidimensionnel ou tridimensionnel de vides ou de trous est formé dans la partie base (10), dans laquelle la partie base (10) comprend un matériau actif qui présente une valeur de dureté Shore supérieure à une première valeur de dureté Shore si la température du matériau actif est inférieure à une première température et présente une valeur de dureté Shore inférieure à une seconde valeur de dureté Shore si la température du matériau actif est supérieure à une deuxième température, dans laquelle la première température est inférieure ou égale à la deuxième température, dans laquelle la première valeur de dureté Shore est supérieure ou égale à la seconde valeur de dureté Shore ; et
- l'élément d'actionnement (30) est conçu pour chauffer la partie base (10) au-dessus de la deuxième température et/ou pour refroidir la partie base (10) en dessous de la première température,
**caractérisée en ce que** :
l'unité de préhension (1) comprend en outre un détecteur de couleur configuré pour détecter une couleur d'au moins certains des filaments (20) et/ou au moins une part de la partie base (10) d'une autre unité de préhension (1) selon l'une quelconque des revendications précédentes, dans laquelle, de préférence, le dispositif de commande (40) est configuré pour commander l'élément d'actionnement (30) de l'autre unité de préhension sur la base de la couleur détectée par le détecteur de couleur.

14. Système de préhension comprenant une première unité de préhension (1) selon l'une quelconque des revendications précédentes et au moins l'un parmi un organe opposé (2) et une seconde unité de préhension (1) selon l'une quelconque des revendications précédentes, dans lequel le système de préhension est conçu pour saisir un objet (100) entre au moins certains des filaments (20) et/ou au moins une part de la partie base (10) de la première unité de préhension (1) et l'au moins un parmi l'organe opposé (2) et la seconde unité de préhension (1), dans lequel, de préférence, la première unité de préhension (1) présente le même matériau actif que la seconde unité de préhension (1).

15. Procédé de préhension d'un objet (100) en utilisant un système de préhension comprenant une première unité de préhension (1) comme étant une unité de préhension (1) selon l'une quelconque des revendications 1 à 13, et au moins l'un parmi un organe opposé (2) et une seconde unité de préhension (1), de préférence une unité de préhension (1) selon l'une quelconque des revendications 1 à 13,
i) dans lequel la première unité de préhension (1) comprend un réseau bidimensionnel de filaments (20), dans lequel les filaments (20) comprennent un matériau actif qui présente une valeur de dureté Shore supérieure à une première valeur de dureté Shore si la température du matériau actif est inférieure à une première température et présente une valeur de dureté Shore inférieure à une seconde valeur de dureté Shore si la température du matériau actif est supérieure à une deuxième température, dans lequel la première température est inférieure ou égale à la deuxième température, dans lequel la première valeur de dureté Shore est supérieure ou égale à la seconde valeur de dureté Shore, dans lequel, de préférence, la première unité de préhension (1) présente le même matériau actif que la seconde unité de préhension (1) ; dans lequel le procédé comprend :
- le maintien et/ou le chauffage des filaments (20) au-dessus de la deuxième température ;
- le positionnement du système de préhension par rapport à l'objet (100) de telle sorte que l'objet (100) se trouve entre la première unité de préhension (1) et l'au moins une parmi l'organe opposé (2) et la seconde unité de préhension (1) ;
- la réduction d'une distance entre la première unité de préhension (1) et l'au moins un parmi l'organe opposé (2) et la seconde unité de préhension (1), de telle sorte qu'au moins certains des filaments (20) sont en contact avec l'objet (100) et/ou pressés contre celui-ci ; et
- le refroidissement éventuel des filaments (20) en dessous de la première température, et/ou
ii) dans lequel la première unité de préhension (1) comprend une partie base (10) avec un réseau bidimensionnel ou tridimensionnel de vides ou de trous formés dans la partie base (10), dans lequel la partie de base (10) comprend un matériau actif qui présente une valeur de dureté Shore supérieure à une première valeur de dureté Shore si la température du matériau actif est inférieure à une première température et présente une valeur de dureté Shore inférieure à une seconde valeur de dureté Shore si la température du matériau actif est supérieure à une deuxième température, dans lequel la première température est inférieure ou égale à la deuxième température, dans lequel la première valeur de dureté Shore est supérieure ou égale à la seconde valeur de dureté Shore, dans lequel, de préférence, la première unité de préhension (1) présente le même matériau actif que la seconde unité de préhension (1) ; dans lequel le procédé comprend :
- le maintien et/ou le chauffage de la partie de base (10) au-dessus de la deuxième température ;
- le positionnement du système de préhension par rapport à l'objet (100) de telle sorte que l'objet (100) se trouve entre la première unité de préhension (1) et l'au moins une parmi l'organe opposé (2) et la seconde unité de préhension (1) ;
- la réduction d'une distance entre la première unité de préhension (1) et l'au moins un parmi l'organe opposé (2) et la seconde unité de préhension (1), de telle sorte qu'au moins une part de la partie base (10) est en contact avec l'objet (100) et/ou pressée contre celui-ci ; et
- le refroidissement éventuel de la partie base (10) en dessous de la première température.
